# EUROPEAN PATENT APPLICATION

(11) **EP 4 154 725 A1**
(43) Date of publication of application: **29.03.2023**
(21) Application number: 21198358.0
(22) Date of filing: 22.09.2021
(51) Int. Cl.: A23J 1/00, A23J 1/14, A23J 1/16, A23J 1/18, A23J 3/22, A23L 5/10

(54) **A COOKED MEAT SUBSTITUTE AND METHOD OF PREPARING SAME**

(71) Applicant: Kerry Luxembourg S.a.r.l., 1820 Luxembourg (LU)
(72) Inventor: TITMUS, Matthew, Burton on Trent (GB); O'SHEA, Mark, Burton on Trent (GB)
(74) Representative: FRKelly

(57) **Abstract**

The present invention relates to a cooked meat substitute. The cooked meat substitute finds utility as a meat-free substitute, for example, pork, chicken and beef. Also disclosed is a method of preparing the cooked meat substitute.

## Description

### Field of the Invention

The present invention relates to a cooked meat substitute. The cooked meat substitute finds utility as a meat-free substitute for, for example, pork, chicken and beef. Also disclosed is a method of preparing the cooked meat substitute.

### Background to the Invention

Consumer acceptance of cooked meat substitutes currently is poor, and there is a need to change this perception by improving the appearance, texture and flavour of plant-based cooked sliced meats.

Traditional meat production has raised concerns regarding animal welfare, and also health concerns regarding the carcinogenic impact of processed meat.

Evidence has shown that plant-based meat substitutes are associated with a range of health benefits. Meat substitutes are also generally a more environmentally friendly alternative to meat, as traditional meat processing is seen as a very inefficient process.

Thus, there remains a need for plant-based cooked meat substitutes with similar appearance, texture and flavour to traditional cook meats; thereby improving animal welfare, abolishing health concerns associated with the carcinogenic impact of processed meat and generally improving health needs.

### Summary of the Invention

According to a first aspect of the present invention, there is provided a cooked meat substitute comprising:
(a) water;
(b) at least one plant protein;
(c) at least one thickener;
(d) a fibre; and
(e) a fat.

According to a second aspect of the present invention, there is provided a method of preparing a cooked meat substitute, the method comprising the steps of:
(a) providing water;
(b) adding at least one plant protein to the water and mixing to form a first mixture;
(c) adding at least one thickener and a fibre to the first mixture, and further mixing to form a second mixture;
(d) adding a fat to the second mixture and further mixing to form a third mixture; and
(e) cooking the third mixture to form a cooked meat substitute.

Optionally, the cooked meat substitute comprises:
(a) water;
(b) a first plant protein
(c) a second plant protein;
(d) a third plant protein;
(e) at least one thickener;
(f) a fibre; and
(g) a fat.

Preferably, the cooked meat substitute comprises:
(a) water;
(b) a first plant protein
(c) a second plant protein;
(d) a third plant protein;
(e) at least one thickener;
(f) a fibre; and
(g) a fat.
wherein the first, second and third plant proteins are different plant proteins.

Optionally, the cooked meat substitute comprises:
(a) water;
(b) a first plant protein
(c) a second plant protein;
(d) a third plant protein;
(e) a first thickener;
(f) a second thickener;
(g) a fibre; and
(h) a fat.

Optionally, the cooked meat substitute comprises:
(a) water;
(b) a first plant protein
(c) a second plant protein;
(d) a third plant protein;
(e) a first thickener;
(f) a second thickener;
(g) a fibre; and
(h) a fat.
wherein the first and second thickeners and different thickeners.

Preferably, the cooked meat substitute comprises:
(i) water;
(j) a first plant protein
(k) a second plant protein;
(l) a third plant protein;
(m) a first thickener;
(n) a second thickener;
(o) a fibre; and
(p) a fat.
wherein the first, second and third plant proteins are different plant proteins and the first and second thickeners and different thickeners.

Further preferably, the cooked meat substitute comprises:
(a) water;
(b) a first plant protein
(c) a second plant protein;
(d) a third plant protein;
(e) a fourth plant protein;
(f) a first thickener;
(g) a second thickener;
(h) a fibre; and
(i) a fat.
wherein the first, second, third plant and fourth proteins are different plant proteins and the first and second thickeners and different thickeners.

Optionally, the cooked meat substitute comprises 60-67%w/w water.

Further optionally, the cooked meat substitute comprises 60.1-66.0%w/w water, optionally 60.2-65.5%w/w water, optionally 60.3-65.0%w/w water, optionally 60.4-64.5%w/w water.

Optionally, the cooked meat substitute comprises:
(a) 60-67%w/w water;
(b) a first plant protein
(c) a second plant protein;
(d) a third plant protein;
(e) a first thickener;
(f) a second thickener;
(g) a fibre; and
(h) a fat.

Preferably, the cooked meat substitute comprises 60.5-64.5%w/w water.

Preferably, the cooked meat substitute comprises:
(a) 60.5-64.5%w/w water;
(b) a first plant protein
(c) a second plant protein;
(d) a third plant protein;
(e) a first thickener;
(f) a second thickener;
(g) a fibre; and
(h) a fat.

Optionally, the at least one plant protein is selected from wheat, soy, lentil, chickpea, spelt, hemp, pea, quinoa, oat, rice, chia, nut, potato and combinations each thereof. Optionally, the at least one plant protein is selected from wheat, soy, and combinations thereof.

Preferably, the at least one plant protein is a combination of wheat and soy. Further preferably, the at least one plant protein is a textured soy protein.

Optionally, the at least one plant protein comprises 8-16%w/w textured soy protein.

Further optionally, the at least one plant protein comprises 8.5-15.5%w/w textured soy protein, optionally 9.0-15.0%w/w textured soy protein, optionally 9.5-15.0%w/w textured soy protein, optionally 10.0-15.0%w/w textured soy protein

Optionally, the first plant protein comprises 8.0-16.0%w/w textured soy protein.

Further optionally, the at least one plant protein comprises 8.5-15.5%w/w textured soy protein, optionally 9.0-15.0%w/w textured soy protein, optionally 9.5-15.0%w/w textured soy protein, optionally 10.0-15.0%w/w textured soy protein.

Optionally, the cooked meat substitute comprises:
(a) 60-67%w/w water;
(b) 8-16%w/w of a first plant protein;
(c) a second plant protein;
(d) a third plant protein;
(e) a first thickener;
(f) a second thickener;
(g) a fibre; and
(h) a fat.

Optionally, the cooked meat substitute comprises:
(a) 60.5-64.5%w/w water;
(b) 8.0-16.0%w/w textured soy protein;
(c) a second plant protein;
(d) a third plant protein;
(e) a first thickener;
(f) a second thickener;
(g) a fibre; and
(h) a fat.

Preferably, the first plant protein comprises 10.10-14.95%w/w textured soy protein.

Preferably, the cooked meat substitute comprises:
(a) 60.5-64.5%w/w water;
(b) 10.10-14.95%w/w textured soy protein;
(c) a second plant protein;
(d) a third plant protein;
(e) a first thickener;
(f) a second thickener;
(g) a fibre; and
(h) a fat.

Optionally, the at least one plant protein comprises 2.80-4.60%w/w soy protein isogel, optionally 2.85-4.30%w/w soy protein isogel, optionally 2.90-4.00%w/w soy protein isogel, optionally 2.95-3.70%w/w soy protein isogel.

Preferably, the at least one plant protein comprises 3.2-3.7%w/w soy protein isogel.

Optionally, the second plant protein comprises 2.80-4.60%w/w soy protein isogel, optionally 2.85-4.30%w/w soy protein isogel, optionally 2.90-4.00%w/w soy protein isogel, optionally 2.95-3.70%w/w soy protein isogel.

Optionally, the cooked meat substitute comprises:
(a) 60-67%w/w water;
(b) 8-16%w/w of a first plant protein;
(c) 2.8-4.6%w/w of a second plant protein;
(d) a third plant protein;
(e) a first thickener;
(f) a second thickener;
(g) a fibre; and
(h) a fat.

Optionally, the cooked meat substitute comprises:
(a) 60.5-64.5%w/w water;
(b) 10.10-14.95%w/w textured soy protein;
(c) 2.8-4.6%w/w soy protein isogel;
(d) a third plant protein;
(e) a first thickener;
(f) a second thickener;
(g) a fibre; and
(h) a fat.

Preferably, the second plant protein comprises 3.2-3.7%w/w soy protein isogel.

Preferably, the cooked meat substitute comprises:
(a) 60.5-64.5%w/w water;
(b) 10.10-14.95%w/w textured soy protein;
(c) 3.2-3.7%w/w soy protein isogel;
(d) a third plant protein;
(e) a first thickener;
(f) a second thickener;
(g) a fibre; and
(h) a fat.

Optionally, the at least one plant protein comprises 0.60-2.20%w/w potato protein; optionally 0.65-1.80%w/w potato protein, optionally 0.70-1.40%w/w potato protein, optionally 0.75-1.00%w/w potato protein.

Preferably, the at least one plant protein comprises 0.8-0.9%w/w potato protein.

Optionally, the third plant protein comprises 0.60-2.20%w/w potato protein; optionally 0.65-1.80%w/w potato protein, optionally 0.70-1.40%w/w potato protein, optionally 0.75-1.00%w/w potato protein.

Optionally, the cooked meat substitute comprises:
(a) 60-67%w/w water;
(b) 8-16%w/w of a first plant protein;
(c) 2.8-4.6%w/w of a second plant protein;
(d) 0.6-2.2%w/w of a third plant protein;
(e) a first thickener;
(f) a second thickener;
(g) a fibre; and
(h) a fat.

Optionally, the cooked meat substitute comprises:
(a) 60.5-64.5%w/w water;
(b) 10.10-14.95%w/w textured soy protein;
(c) 3.2-3.7%w/w soy protein isogel;
(d) 0.6-2.2%w/w potato protein;
(e) a first thickener;
(f) a second thickener;
(g) a fibre; and
(h) a fat.

Preferably, the third plant protein comprises 0.8-0.9%w/w potato protein.

Preferably, the cooked meat substitute comprises:
(a) 60.5-64.5%w/w water;
(b) 10.10-14.95%w/w textured soy protein;
(c) 3.2-3.7%w/w soy protein isogel;
(d) 0.8-0.9%w/w potato protein;
(e) a first thickener;
(f) a second thickener;
(g) a fibre; and
(h) a fat.

Optionally, the at least one thickener is a protein. Optionally, the at least one thickener comprises a plant protein. Optionally, the at least one thickener comprises a plant protein, wherein the plant protein is gluten. Optionally, the gluten comprises wheat gluten.

Preferably, the gluten comprises wheat gluten.

Optionally, the at least one thickener comprises 2-11%w/w gluten.

Further optionally, the at least one thickener comprises 3.00-10.75%w/w gluten, optionally 4.00-10.50%w/w gluten, optionally 5.00-10.25%w/w gluten, optionally 6.00-10.00%w/w gluten, optionally 7.00-9.75%w/w gluten, optionally 8.00-9.50%w/w gluten.

Preferably, the at least one thickener comprises 8.0-9.4%w/w gluten.

Optionally, the at least one thickener comprises 2-11%w/w wheat gluten.

Further optionally, the at least one thickener comprises 3.00-10.75%w/w wheat gluten, optionally 4.00-10.50%w/w wheat gluten, optionally 5.00-10.25%w/w wheat gluten, optionally 6.00-10.00%w/w wheat gluten, optionally 7.00-9.75%w/w wheat gluten, optionally 8.00-9.50%w/w wheat gluten.

Preferably, the at least one thickener comprises 8.0-9.4%w/w wheat gluten.

Optionally, the cooked meat substitute comprises:
(a) 60-67%w/w water;
(b) 8-16%w/w of a first plant protein;
(c) 2.8-4.6%w/w of a second plant protein;
(d) 0.6-2.2%w/w of a third plant protein;
(e) 2-11 %w/w of a first thickener;
(f) a second thickener;
(g) a fibre; and
(h) a fat.

Optionally, the cooked meat substitute comprises:
(a) 60-67%w/w water;
(b) 8-16%w/w textured soy protein;
(c) 3.2-3.7%w/w soy protein isogel;
(d) 0.6-2.2%w/w potato protein;
(e) 2-11%w/w gluten;
(f) a second thickener;
(g) a fibre; and
(h) a fat.

Preferably, the first thickener comprises 8.0-9.4%w/w gluten.

Preferably, the cooked meat substitute comprises:
(a) 60.5-64.5%w/w water;
(b) 10.10-14.95%w/w textured soy protein;
(c) 3.2-3.7%w/w soy protein isogel;
(d) 0.8-0.9%w/w potato protein;
(e) 8.0-9.4%w/w gluten;
(f) a second thickener;
(g) a fibre; and
(h) a fat.

Optionally, the first thickener comprises 2-11%w/w wheat gluten.

Further optionally, the first thickener comprises 3.00-10.75w/w wheat gluten, optionally 4.00-10.50%w/w wheat gluten, optionally 5.00-10.25%w/w wheat gluten, optionally 6.00-10.00%w/w wheat gluten, optionally 7.00-9.75%w/w wheat gluten, optionally 8.00-9.50%w/w wheat gluten.

Preferably, the second thickener comprises 8.0-9.4%w/w wheat gluten.

Preferably, the cooked meat substitute comprises:
(a) 60.5-64.5%w/w water;
(b) 10.10-14.95%w/w textured soy protein;
(c) 3.2-3.7%w/w soy protein isogel;
(d) 0.8-0.9%w/w potato protein;
(e) 8.0-9.4%w/w wheat gluten;
(f) a second thickener;
(g) a fibre; and
(h) a fat.

Optionally, the at least one thickener is a carrageenan. Further optionally, the at least one thickener is a carrageenan selected from kappa-carrageenan, iota-carrageenan, lambda-carrageenan, and combinations each thereof.

Preferably, the at least one thickener comprises kappa-carrageenan.

Optionally, the at least one thickener comprises 0.80-2.20%w/w carrageenan; optionally 0.90-2.15%w/w carrageenan, optionally 1.00-2.10%w/w carrageenan, optionally 1.10-2.05%w/w carrageenan, optionally 1.20-2.00%w/w carrageenan, optionally 1.30-1.95%w/w carrageenan, optionally 1.30-1.90%w/w carrageenan, optionally 1.40-1.90%w/w carrageenan, optionally 1.50-1.90%w/w carrageenan.

Preferably, the at least one thickener comprises 1.6-1.9% w/w carrageenan.

Optionally, the second thickener comprises 0.80-2.20%w/w carrageenan; optionally 0.90-2.15%w/w carrageenan, optionally 1.00-2.10%w/w carrageenan, optionally 1.10-2.05%w/w carrageenan, optionally 1.20-2.00%w/w carrageenan, optionally 1.30-1.95%w/w carrageenan, optionally 1.30-1.90%w/w carrageenan, optionally 1.40-1.90%w/w carrageenan, optionally 1.50-1.90%w/w carrageenan.

Optionally, the cooked meat substitute comprises:
(a) 60-67%w/w water;
(b) 8-16%w/w of a first plant protein;
(c) 2.8-4.6%w/w of a second plant protein;
(d) 0.6-2.2%w/w of a third plant protein;
(e) 2-11 %w/w of a first thickener;
(f) 0.8-2.2%w/w of a second thickener;
(g) a fibre; and
(h) a fat.

Optionally, the cooked meat substitute comprises:
(a) 60-67%w/w water;
(b) 8-16%w/w textured soy protein;
(c) 2.8-4.6%w/w soy protein isogel;
(d) 0.6-2.2%w/w potato protein;
(e) 2-11%w/w wheat gluten;
(f) 0.8-2.2%w/w of a second thickener;
(g) a fibre; and
(h) a fat.

Optionally, the cooked meat substitute comprises:
(a) 60-67%w/w water;
(b) 8-16%w/w textured soy protein;
(c) 2.8-4.6%w/w soy protein isogel;
(d) 0.6-2.2%w/w potato protein;
(e) 2-11%w/w wheat gluten;
(f) 0.8-2.2%w/w carrageenan;
(g) a fibre; and
(h) a fat.

Preferably, the second thickener comprises 1.6-1.9%w/w carrageenan.

Preferably, the cooked meat substitute comprises:
(a) 60.5-64.5%w/w water;
(b) 10.10-14.95%w/w textured soy protein;
(c) 3.2-3.7%w/w soy protein isogel;
(d) 0.8-0.9%w/w potato protein;
(e) 8.0-9.4%w/w wheat gluten;
(f) 1.6-1.9%w/w carrageenan;
(g) a fibre; and
(h) a fat.

Optionally, the at least one thickener comprises 0.80-2.20%w/w kappa-carrageenan; optionally 0.90-2.15%w/w kappa-carrageenan, optionally 1.00-2.10%w/w kappa-carrageenan, optionally 1.10-2.05%w/w kappa-carrageenan, optionally 1.20-2.00%w/w kappa-carrageenan, optionally 1.30-1.95%w/w kappa-carrageenan, optionally 1.30-1.90%w/w kappa-carrageenan, optionally 1.40-1.90%w/w kappa-carrageenan, optionally 1.50-1.90%w/w kappa-carrageenan.

Preferably, the at least one thickener comprises 1.6-1.9% w/w kappa-carrageenan.

Optionally, the second thickener comprises 0.80-2.20%w/w kappa-carrageenan; optionally 0.90-2.15%w/w kappa-carrageenan, optionally 1.00-2.10%w/w kappa-carrageenan, optionally 1.10-2.05%w/w kappa-carrageenan, optionally 1.20-2.00%w/w kappa-carrageenan, optionally 1.30-1.95%w/w kappa-carrageenan, optionally 1.30-1.90%w/w kappa-carrageenan, optionally 1.40-1.90%w/w kappa-carrageenan, optionally 1.50-1.90%w/w kappa-carrageenan.

Optionally, the cooked meat substitute comprises:
(a) 60.5-64.5%w/w water;
(b) 10.10-14.95%w/w textured soy protein;
(c) 3.2-3.7%w/w soy protein isogel;
(d) 0.8-0.9%w/w potato protein;
(e) 8.0-9.4%w/w wheat gluten;
(f) 0.8-2.2%w/w kappa-carrageenan;
(g) a fibre; and
(h) a fat.

Preferably, the second thickener comprises 1.6-1.9% w/w kappa-carrageenan.

Preferably, the cooked meat substitute comprises:
(a) 60.5-64.5%w/w water;
(b) 10.10-14.95%w/w textured soy protein;
(c) 3.2-3.7%w/w soy protein isogel;
(d) 0.8-0.9%w/w potato protein;
(e) 8.0-9.4%w/w wheat gluten;
(f) 1.6-1.9%w/w kappa-carrageenan;
(g) a fibre; and
(h) a fat.

Optionally, the fibre is selected from any one of more of bamboo fibre, potato fibre, pea fibre, citrus fibre, oat fibre, chicory root fibre, wheat fibre, and combinations each thereof.

Optionally, the cooked meat substitute comprises 0.2-2.0%w/w fibre; optionally 0.2-1.5%w/w fibre, optionally 0.2-1.0%w/w fibre, optionally 0.2-0.5%w/w fibre.

Optionally, the cooked meat substitute comprises:
(a) 60-67%w/w water;
(b) 8-16%w/w of a first plant protein;
(c) 2.8-4.6%w/w of a second plant protein;
(d) 0.6-2.2%w/w of a third plant protein;
(e) 2-11 %w/w of a first thickener;
(f) 0.8-2.2%w/w of a second thickener;
(g) a 0.2-2.0%w/w fibre; and
(h) a fat.

Preferably, the fibre is bamboo fibre.

Optionally, the cooked meat substitute comprises 0.2-2.0%w/w bamboo fibre; optionally 0.2-1.5%w/w bamboo fibre, optionally 0.2-1.0%w/w bamboo fibre, optionally 0.2-0.5%w/w bamboo fibre.

Optionally, the cooked meat substitute comprises:
(a) 60-67%w/w water;
(b) 8-16%w/w textured soy protein;
(c) 2.8-4.6%w/w soy protein isogel;
(d) 0.6-2.2%w/w potato protein;
(e) 2-11%w/w wheat gluten;
(f) 0.8-2.2%w/w kappa-carrageenan;
(g) 0.2-2.0%w/w of a fibre; and
(h) a fat.

Preferably, the cooked meat substitute comprises 0.2%w/w bamboo fibre.

Preferably, the cooked meat substitute comprises:
(a) 60.5-64.5%w/w water;
(b) 10.10-14.95%w/w textured soy protein;
(c) 3.2-3.7%w/w soy protein isogel;
(d) 0.8-0.9%w/w potato protein;
(e) 8.0-9.4%w/w wheat gluten;
(f) 1.6-1.9%w/w kappa-carrageenan;
(g) 0.2-2.0%w/w bamboo fibre; and
(h) a fat.

Optionally, the fat is a saturated fat. Further optionally, the fat is a saturated oil. Alternatively, the fat is an unsaturated fat. Further alternatively, the fat is an unsaturated oil. Optionally, the fat is a monounsaturated fat. Further optionally, the fat is a monounsaturated oil. Alternatively, the fat is a polyunsaturated fat. Further alternatively, the fat is polyunsaturated oil. Optionally, the fat is a plant fat. Further optionally, the fat is a vegetable fat. Still further optionally, the fat is a seed fat. Still further optionally, the fat is a fruit fat. Still further optionally, the fat is a nut fat. Still further optionally, the fat is drupe fat. Optionally, the fat is an oil. Optionally, the fat is a plant oil. Further optionally, the fat is a vegetable oil. Still further optionally, the fat is a seed oil. Still further optionally, the fat is a fruit oil. Still further optionally, the fat is a nut oil. Still further optionally, the fat is a drupe oil. Optionally, the fat is palm oil, soybean oil, rapeseed oil, sunflower oil, peanut oil, cottonseed oil, coconut oil, olive oil, or combinations each thereof.

Preferably, the fat is a rapeseed oil.

Optionally, the cooked meat substitute comprises 0.6-6.0%w/w fat, optionally 1.2-5.5%w/w fat, optionally 1.2-5.5%w/w fat, optionally 1.8-5.0%w/w fat, optionally 2.4-4.5%w/w fat, optionally 3.0-4.5%w/w fat.

Optionally, the cooked meat substitute comprises:
(a) 60-67%w/w water;
(b) 8-16%w/w of a first plant protein;
(c) 2.8-4.6%w/w of a second plant protein;
(d) 0.6-2.2%w/w of a third plant protein;
(e) 2-11 %w/w of a first thickener;
(f) 0.8-2.2%w/w of a second thickener;
(g) 0.2-2.0%w/w of a fibre; and
(h) 0.6-6.0%w/w of a fat.

Optionally, the cooked meat substitute comprises:
(a) 60-67%w/w water;
(b) 8-16%w/w textured soy protein;
(c) 2.8-4.6%w/w soy protein isogel;
(d) 0.6-2.2%w/w potato protein;
(e) 2-11%w/w wheat gluten;
(f) 0.8-2.2%w/w kappa-carrageenan;
(g) 0.2-2.0%w/w bamboo fibre; and
(h) 0.6-6.0%w/w a fat.

Preferably, the cooked meat substitute comprises 3.00-4.48%w/w fat.

Preferably, the cooked meat substitute comprises:
(a) 60.5-64.5%w/w water;
(b) 10.10-14.95%w/w textured soy protein;
(c) 3.2-3.7%w/w soy protein isogel;
(d) 0.8-0.9%w/w potato protein;
(e) 8.0-9.4%w/w wheat gluten;
(f) 1.6-1.9%w/w kappa-carrageenan;
(g) 0.2-2.0%w/w bamboo fibre; and
(h) 3.0-4.48%%w/w a fat.

Optionally, the cooked meat substitute comprises 0.6-6.0%w/w vegetable oil, optionally 1.2-5.5%w/w vegetable oil, optionally 1.2-5.5%w/w vegetable oil, optionally 1.8-5.0%w/w vegetable oil, optionally 2.4-4.5%w/w vegetable oil, optionally 3.0-4.5%w/w vegetable oil.

Optionally, the cooked meat substitute comprises:
(a) 60-67%w/w water;
(b) 8-16%w/w textured soy protein;
(c) 2.8-4.6%w/w soy protein isogel;
(d) 0.6-2.2%w/w potato protein;
(e) 2-11%w/w wheat gluten;
(f) 0.8-2.2%w/w kappa-carrageenan;
(g) 0.2-2.0%w/w bamboo fibre; and
(a) 0.6-6.0%w/w vegetable oil.

Preferably, the cooked meat substitute comprises 3.00-4.48%w/w vegetable oil.

Preferably, the cooked meat substitute comprises:
(a) 60.5-64.5%w/w water;
(b) 10.10-14.95%w/w textured soy protein;
(c) 3.2-3.7%w/w soy protein isogel;
(d) 0.8-0.9%w/w potato protein;
(e) 8.0-9.4%w/w wheat gluten;
(f) 1.6-1.9%w/w kappa-carrageenan;
(g) 0.2-2.0%w/w bamboo fibre; and
(h) 3.00-4.48%%w/w vegetable oil.

Optionally, the cooked meat substitute comprises 0.6-6.0%w/w seed oil, optionally 1.2-5.5%w/w seed oil, optionally 1.2-5.5%w/w seed oil, optionally 1.8-5.0%w/w seed oil, optionally 2.4-4.5%w/w seed oil, optionally 3.0-4.5%w/w seed oil.

Optionally, the cooked meat substitute comprises:
(a) 60-67%w/w water;
(b) 8-16%w/w textured soy protein;
(c) 2.8-4.6%w/w soy protein isogel;
(d) 0.6-2.2%w/w potato protein;
(e) 2-11%w/w wheat gluten;
(f) 0.8-2.2%w/w kappa-carrageenan;
(g) 0.2-2.0%w/w bamboo fibre; and
(a) 0.6-6.0%w/w seed oil.

Preferably, the cooked meat substitute comprises 3.00-4.48%w/w seed oil.

Preferably, the cooked meat substitute comprises:
(a) 60.5-64.5%w/w water;
(b) 10.10-14.95%w/w textured soy protein;
(c) 3.2-3.7%w/w soy protein isogel;
(d) 0.8-0.9%w/w potato protein;
(e) 8.0-9.4%w/w wheat gluten;
(f) 1.6-1.9%w/w kappa-carrageenan;
(g) 0.2-2.0%w/w bamboo fibre; and
(h) 3.00-4.48%%w/w seed oil.

Optionally, the cooked meat substitute comprises 0.6-6.0%w/w rapeseed oil, optionally 1.2-5.5%w/w rapeseed oil, optionally 1.2-5.5%w/w rapeseed oil, optionally 1.8-5.0%w/w rapeseed oil, optionally 2.4-4.5%w/w rapeseed oil, optionally 3.0-4.5%w/w rapeseed oil.

Optionally, the cooked meat substitute comprises:
(a) 60-67%w/w water;
(b) 8-16%w/w textured soy protein;
(c) 2.8-4.6%w/w soy protein isogel;
(d) 0.6-2.2%w/w potato protein;
(e) 2-11%w/w wheat gluten;
(f) 0.8-2.2%w/w kappa-carrageenan;
(g) 0.2-2.0%w/w bamboo fibre; and
(a) 0.6-6.0%w/w rapeseed oil.

Preferably, the cooked meat substitute comprises 3.00-4.48%w/w rapeseed oil.

Preferably, the cooked meat substitute comprises:
(a) 60.5-64.5%w/w water;
(b) 10.10-14.95%w/w textured soy protein;
(c) 3.2-3.7%w/w soy protein isogel;
(d) 0.8-0.9%w/w potato protein;
(e) 8.0-9.4%w/w wheat gluten;
(f) 1.6-1.9%w/w kappa-carrageenan;
(g) 0.2-2.0%w/w bamboo fibre; and
(h) 3.00-4.48%%w/w rapeseed oil.

Optionally, the cooked meat substitute is a cooked chicken substitute. Optionally, the cooked meat substitute is a cooked beef substitute. Optionally, the cooked meat substitute is a cooked pork substitute. Optionally, the cooked meat substitute is a cooked ham substitute.

Preferably, the cooked meat substitute is a cooked chicken substitute, and/or a cooked beef substitute, and/or a cooked ham substitute.

Optionally, the cooked meat substitute further comprises flavouring.

Optionally, there is provided a cooked meat substitute comprising:
(a) water;
(b) at least one plant protein;
(c) at least one thickener;
(d) a fibre;
(e) a fat; and
(f) flavouring

Optionally, the cooked meat substitute comprises:
(a) water;
(b) a first plant protein
(c) a second plant protein;
(d) a third plant protein;
(e) at least one thickener;
(f) a fibre;
(g) a fat; and
(h) flavouring

Preferably, the cooked meat substitute comprises:
(a) water;
(b) a first plant protein
(c) a second plant protein;
(d) a third plant protein;
(e) at least one thickener;
(f) a fibre;
(g) a fat; and
(h) flavouring
wherein the first, second and third plant proteins are different plant proteins.

Further preferably, the cooked meat substitute comprises:
(a) water;
(b) a first plant protein
(c) a second plant protein;
(d) a third plant protein;
(e) a fourth plant protein
(f) at least one thickener;
(g) a fibre;
(h) a fat; and
(i) flavouring
wherein the first, second, third and fourth plant proteins are different plant proteins.

Optionally, the cooked meat substitute comprises:
(a) water;
(b) a first plant protein
(c) a second plant protein;
(d) a third plant protein;
(e) a first thickener;
(f) a second thickener;
(g) a fibre;
(h) a fat; and
(i) flavouring.

Preferably, the cooked meat substitute comprises:
(a) water;
(b) a first plant protein
(c) a second plant protein;
(d) a third plant protein;
(e) a first thickener;
(f) a second thickener;
(g) a fibre;
(h) a fat; and
(i) flavouring
wherein the first, second and third plant proteins are different plant proteins and the first and second thickeners and different thickeners.

Further preferably, the cooked meat substitute comprises:
(a) water;
(b) a first plant protein
(c) a second plant protein;
(d) a third plant protein;
(e) a fourth plant protein
(f) a first thickener;
(g) a second thickener;
(h) a fibre;
(i) a fat; and
(j) flavouring
wherein the first, second, third and fourth plant proteins are different plant proteins and the first and second thickeners and different thickeners.

Optionally, the cooked meat substitute comprises 3.6-6.0%w/w flavouring, optionally 3.6-5.5%w/w flavouring, optionally 3.6-5.0%w/w flavouring, optionally 3.6-4.5%w/w flavouring.

Preferably, the cooked meat substitute comprises 3.5-4.8%w/w flavouring.

Optionally, the cooked meat substitute is a cooked ham substitute.

Optionally, the cooked ham substitute comprises 3.5-6.0%w/w flavouring, optionally 3.5-5.5%w/w flavouring, optionally 3.5-5.0%w/w flavouring, optionally 3.5-4.5%w/w flavouring.

Preferably, the cooked ham substitute comprises 3.51%w/w flavouring.

Optionally, the cooked ham substitute comprises 3.51%w/w flavouring comprising salt, base ham flavour, boiled ham flavour, gammon flavour and yeast extract.

Preferably, the cooked ham substitute comprises 3.50%w/w flavouring comprising 1.66%w/w salt, 0.41%w/w base ham flavour, 0.83%w/w boiled ham flavour, 0.30%w/w gammon flavour and 0.30%w/w yeast extract.

Optionally, the cooked ham substitute comprises:
(a) 60-67%w/w water;
(b) 8-16%w/w of a first plant protein;
(c) 2.8-4.6%w/w of a second plant protein;
(d) 0.6-2.2%w/w of a third plant protein;
(e) 2-11 %w/w of a first thickener;
(f) 0.8-2.2%w/w of a second thickener;
(g) 0.2-2.0%w/w of a fibre;
(h) 0.6-6.0%w/w of a fat; and
(i) 3.5-6.0%w/w flavouring.

Preferably, the cooked ham substitute comprises:
(a) 65%w/w water;
(b) 11%w/w of a first plant protein;
(c) 4%w/w of a second plant protein;
(d) 1%w/w of a third plant protein;
(e) 9%w/w of a first thickener;
(f) 2%w/w of a second thickener;
(g) 1%w/w of a fibre;
(h) 4%w/w of a fat; and
(i) 3%w/w flavouring.

Further preferably, the cooked ham substitute comprises:
(a) 65.14%w/w water;
(b) 11.02%w/w of a first plant protein;
(c) 3.75%w/w of a second plant protein;
(d) 0.95%w/w of a third plant protein;
(e) 9.51%w/w of a first thickener;
(f) 1.88%w/w of a second thickener;
(g) 0.19%w/w of a fibre;
(h) 4.01%w/w of a fat; and
(i) 3.55%w/w flavouring.

Even further preferably, the cooked ham substitute comprises:
(a) 65.138%w/w water;
(b) 11.018%w/w of a first plant protein;
(c) 3.749%w/w of a second plant protein;
(d) 0.951%w/w of a third plant protein;
(e) 9.514%w/w of a first thickener;
(f) 1.884%w/w of a second thickener;
(g) 0.191%w/w of a fibre;
(h) 4.009%w/w of a fat; and
(i) 3.545%w/w flavouring.

Optionally, the cooked meat product is a cooked beef substitute.

Optionally, the cooked beef substitute comprises 3.6-6.0%w/w flavouring, optionally 3.6-5.5%w/w flavouring, optionally 3.6-5.0%w/w flavouring, optionally 3.6-4.5%w/w flavouring.

Preferably, the cooked beef substitute comprises 5.72%w/w flavouring.

Optionally, the cooked beef substitute comprises 5.72%w/w flavouring comprising salt, beef roast flavour, beef flavour, roasted meat flavour, juicy beef marrow flavour, Savarome RBN, Oven roast extract, citric acid and barley malt extract.

Preferably, the cooked beef substitute comprises 5.72%w/w flavouring comprising 1.08%w/w salt, 1.41%w/w beef roast flavour, 0.35%w/w beef flavour, 0.70%w/w roasted meat flavour, 0.70%w/w juicy beef marrow flavour, 0.23%w/w Savarome RBN, 0.23%w/w Oven roast extract, 0.12%w/w citric acid and 0.35%w/w barley malt extract.

Optionally, the cooked beef substitute comprises:
(a) 60-67%w/w water;
(b) 8-16%w/w of a first plant protein;
(c) 2.8-4.6%w/w of a second plant protein;
(d) 0.6-2.2%w/w of a third plant protein;
(e) 2-11 %w/w of a first thickener;
(f) 0.8-2.2%w/w of a second thickener;
(g) 0.2-2.0%w/w of a fibre;
(h) 0.6-6.0%w/w of a fat; and
(i) 3.6-6.0%w/w flavouring.

Preferably, the cooked beef substitute comprises:
(a) 65%w/w water;
(b) 11%w/w of a first plant protein;
(c) 4%w/w of a second plant protein;
(d) 1%w/w of a third plant protein;
(e) 8%w/w of a first thickener;
(f) 2%w/w of a second thickener;
(g) 1%w/w of a fibre;
(h) 3%w/w of a fat; and
(i) 5%w/w flavouring.

Further preferably, the cooked beef substitute comprises:
(a) 65.34%w/w water;
(b) 10.91%w/w of a first plant protein;
(c) 3.42%w/w of a second plant protein;
(d) 0.86%w/w of a third plant protein;
(e) 8.64%w/w of a first thickener;
(f) 1.71%w/w of a second thickener;
(g) 0.17%w/w of a fibre;
(h) 3.24%w/w of a fat; and
(i) 5.18%w/w flavouring.

Even further preferably, the cooked beef substitute comprises:
(a) 65.335%w/w water;
(b) 10.907%w/w of a first plant protein;
(c) 3.422%w/w of a second plant protein;
(d) 0.864%w/w of a third plant protein;
(e) 8.641%w/w of a first thickener;
(f) 1.712%w/w of a second thickener;
(g) 0.174%w/w of a fibre;
(h) 3.24%w/w of a fat; and
(i) 5.184%w/w flavouring.

Optionally, the cooked meat product is a chicken substitute.

Optionally, the cooked chicken substitute comprises 2.70-6.00%w/w flavouring, optionally 2.80-5.50%w/w flavouring, optionally 2.90-5.00%w/w flavouring, optionally 3.00-4.50%w/w flavouring, optionally 3.10-4.00%w/w flavouring, optionally 3.20-3.80%w/w flavouring, optionally 3.30-3.60%w/w flavouring, optionally 3.40-3.60%w/w flavouring.

Preferably, the cooked chicken substitute comprises 3.45%w/w flavouring.

Optionally, the cooked chicken substitute comprises 3.45%w/w flavouring comprising salt, yeast extract, chicken flavour and natural flavourings.

Preferably, the cooked chicken substitute comprises 2.99%w/w flavouring comprising 0.60%w/w salt, 0.90w/w yeast extract, 2.09%w/w chicken flavour and 0.46%w/w natural flavourings.

Optionally, the cooked chicken substitute comprises:
(a) 60-67%w/w water;
(b) 8-16%w/w of a first plant protein;
(c) 2.8-4.6%w/w of a second plant protein;
(d) 0.6-2.2%w/w of a third plant protein;
(e) 2-11%w/w of a first thickener;
(f) 0.8-2.2%w/w of a second thickener;
(g) 0.2-2.0%w/w of a fibre;
(h) 0.6-6.0%w/w of a fat; and
(i) 2.7-6.0%w/w flavouring.

Preferably, the cooked chicken substitute comprises:
(a) 63%w/w water;
(b) 15%w/w of a first plant protein;
(c) 3%w/w of a second plant protein;
(d) 1%w/w of a third plant protein;
(e) 8%w/w of a first thickener;
(f) 1%w/w of a second thickener;
(g) 1%w/w of a fibre;
(h) 4%w/w of a fat; and
(i) 4%w/w flavouring.

Further preferably, the cooked chicken substitute comprises:
(j) 62.77%w/w water;
(k) 14.95%w/w of a first plant protein;
(l) 3.16%w/w of a second plant protein;
(m) 0.80%w/w of a third plant protein;
(n) 8.04%w/w of a first thickener;
(o) 1.59%w/w of a second thickener;
(p) 0.16%w/w of a fibre;
(q) 4.48%w/w of a fat; and
(r) 3.45%w/w flavouring.

Even further preferably, the cooked chicken substitute comprises:
(a) 62.77%w/w water;
(b) 14.95%w/w of a first plant protein;
(c) 3.16%w/w of a second plant protein;
(d) 0.801%w/w of a third plant protein;
(e) 8.037%w/w of a first thickener;
(f) 1.592%w/w of a second thickener;
(g) 0.16%w/w of a fibre;
(h) 4.48%w/w of a fat; and
(i) 3.45%w/w flavouring.

Optionally, the cooked meat substitute further comprises colouring.

Optionally, there is provided a cooked meat substitute comprising:
(a) water;
(b) at least one plant protein;
(c) at least one thickener;
(d) a fibre;
(e) a fat; and
(f) colouring

Optionally, the cooked meat substitute comprises:
(a) water;
(b) a first plant protein
(c) a second plant protein;
(d) a third plant protein;
(e) at least one thickener;
(f) a fibre;
(g) a fat; and
(h) colouring

Preferably, the cooked meat substitute comprises:
(a) water;
(b) a first plant protein
(c) a second plant protein;
(d) a third plant protein;
(e) at least one thickener;
(f) a fibre;
(g) a fat; and
(h) colouring
wherein the first, second and third plant proteins are different plant proteins.

Further preferably, the cooked meat substitute comprises:
(a) water;
(b) a first plant protein
(c) a second plant protein;
(d) a third plant protein;
(e) a fourth plant protein
(f) at least one thickener;
(g) a fibre;
(h) a fat; and
(i) colouring
wherein the first, second, third and fourth plant proteins are different plant proteins.

Optionally, the cooked meat substitute comprises:
(a) water;
(b) a first plant protein
(c) a second plant protein;
(d) a third plant protein;
(e) a first thickener;
(f) a second thickener;
(g) a fibre;
(h) a fat; and
(i) colouring

Preferably, the cooked meat substitute comprises:
(a) water;
(b) a first plant protein
(c) a second plant protein;
(d) a third plant protein;
(e) a first thickener;
(f) a second thickener;
(g) a fibre;
(h) a fat; and
(i) colouring
wherein the first, second and third plant proteins are different plant proteins and the first and second thickeners and different thickeners.

Further preferably, the cooked meat substitute comprises:
(a) water;
(b) a first plant protein
(c) a second plant protein;
(d) a third plant protein;
(e) a fourth plant protein
(f) a first thickener;
(g) a second thickener;
(h) a fibre;
(i) a fat; and
(j) colouring
wherein the first, second, third and fourth plant proteins are different plant proteins and the first and second thickeners and different thickeners.

Preferably, the colouring is EXBERRY^{®} Shade Fiesta Pink Powder.

Further preferably, the colouring is EXBERRY^{®} Shade Fiesta Pink Powder GNT Product No. 51420002.

Even further preferably, the colouring is EXBERRY^{®} Shade Fiesta Pink Powder GNT Product No. 51420002 manufactured from radish apple and blackcurrant.

Even further preferably, the colouring is EXBERRY^{®} Shade Fiesta Pink Powder GNT Product No. 51420002 manufactured from radish apple and blackcurrant and processed with water, maltodextrin and citric acid.

Optionally, the cooked meat substitute comprises 0.1-1.2%%w/w colouring; optionally 0.2-1.1%%w/w colouring, optionally 0.3-1.1%%w/w colouring.

Preferably, the cooked meat substitute comprises 0.4-1.0%w/w colouring.

Optionally, the cooked meat substitute is a cooked ham substitute.

Optionally, the cooked ham substitute comprises 0.1-1.2%%w/w colouring; optionally 0.2-1.1%%w/w colouring. 0.3-1.1%%w/w colouring, 0.4-1.0%%w/w colouring.

Optionally, the cooked ham substitute comprises:
(a) 60-67%w/w water;
(b) 8-16%w/w of a first plant protein;
(c) 2.8-4.6%w/w of a second plant protein;
(d) 0.6-02.2%w/w of a third plant protein;
(e) 2-11 %w/w of a first thickener;
(f) 0.8-2.2%w/w of a second thickener;
(g) 0.2-2.0%w/w of a fibre;
(h) 0.6-6.0%w/w of a fat; and
(i) 0.1-1.2%%w/w colouring.

Preferably, the cooked ham substitute comprises 0.94%w/w colouring.

Preferably, the cooked ham substitute comprises:
(a) 67%w/w water;
(b) 11%w/w of a first plant protein;
(c) 4%w/w of a second plant protein;
(d) 1%w/w of a third plant protein;
(e) 9%w/w of a first thickener;
(f) 2%w/w of a second thickener;
(g) 1%w/w of a fibre;
(h) 4%w/w of a fat; and
(i) 1%w/w colouring.

Further preferably, the cooked ham substitute comprises:
(a) 66.9%w/w water;
(b) 11.32%w/w of a first plant protein;
(c) 3.85%w/w of a second plant protein;
(d) 0.98%w/w of a third plant protein;
(e) 9.77%w/w of a first thickener;
(f) 1.94%w/w of a second thickener;
(g) 0.2%w/w of a fibre;
(h) 4.12%w/w of a fat; and
(i) 0.94%w/w colouring.

Even Further preferably, the cooked ham substitute comprises:
(a) 66.902%w/w water;
(b) 11.316%w/w of a first plant protein;
(c) 3.85%w/w of a second plant protein;
(d) 0.977%w/w of a third plant protein;
(e) 9.772%w/w of a first thickener;
(f) 1.935%w/w of a second thickener;
(g) 0.196%w/w of a fibre;
(h) 4.118%w/w of a fat; and
(i) 0.934%w/w colouring.

Optionally, the cooked meat substitute is a cooked beef substitute.

Optionally, the cooked beef substitute comprises 0.1-1.2%%w/w colouring; optionally 0.2-1.1%%w/w colouring. 0.3-1.1%%w/w colouring, 0.4-1.0%%w/w colouring.

Optionally, the cooked beef substitute comprises:
(a) 60-67%w/w water;
(b) 8-16%w/w of a first plant protein;
(c) 2.8-4.6%w/w of a second plant protein;
(d) 0.6-2.2%w/w of a third plant protein;
(e) 2-11 %w/w of a first thickener;
(f) 0.8-2.2%w/w of a second thickener;
(g) 0.2-2.0%w/w of a fibre;
(h) 0.6-6.0%w/w of a fat; and
(i) 0.1-6.0%w/w flavouring.

Preferably, the cooked beef substitute comprises 0.46%w/w colouring.

Preferably, the cooked beef substitute comprises:
(a) 69%w/w water;
(b) 11%w/w of a first plant protein;
(c) 3%w/w of a second plant protein;
(d) 1%w/w of a third plant protein;
(e) 9%w/w of a first thickener;
(f) 2%w/w of a second thickener;
(g) 1%w/w of a fibre;
(h) 3%w/w of a fat; and
(i) 1%w/w colouring.

Further preferably, the cooked beef substitute comprises:
(a) 68.9%w/w water;
(b) 11.52%w/w of a first plant protein;
(c) 3.59%w/w of a second plant protein;
(d) 0.91%w/w of a third plant protein;
(e) 9.12%w/w of a first thickener;
(f) 1.81%w/w of a second thickener;
(g) 0.18%w/w of a fibre;
(h) 3.42%w/w of a fat; and
(i) 0.46%w/w colouring.

Even further preferably, the cooked beef substitute comprises:
(a) 68.895%w/w water;
(b) 11.517%w/w of a first plant protein;
(c) 3.594%w/w of a second plant protein;
(d) 0.912%w/w of a third plant protein;
(e) 9.124%w/w of a first thickener;
(f) 1.807%w/w of a second thickener;
(g) 0.184%w/w of a fibre;
(h) 3.421%w/w of a fat; and
(i) 0.456%w/w colouring.

Optionally, the cooked meat substitute further comprises colouring and flavouring.

Optionally, there is provided a cooked meat substitute comprising:
(a) water;
(b) at least one plant protein;
(c) at least one thickener;
(d) a fibre;
(e) a fat;
(f) colouring; and
(g) flavouring

Optionally, the cooked meat substitute comprises:
(a) water;
(b) a first plant protein
(c) a second plant protein;
(d) a third plant protein;
(e) at least one thickener;
(f) a fibre;
(g) a fat;
(h) colouring; and
(i) flavouring

Preferably, the cooked meat substitute comprises:
(a) water;
(b) a first plant protein
(c) a second plant protein;
(d) a third plant protein;
(e) at least one thickener;
(f) a fibre;
(g) a fat;
(h) colouring; and
(i) flavouring
wherein the first, second and third plant proteins are different plant proteins.

Further preferably, the cooked meat substitute comprises:
(a) water;
(b) a first plant protein
(c) a second plant protein;
(d) a third plant protein;
(e) a fourth plant protein;
(f) at least one thickener;
(g) a fibre;
(h) a fat;
(i) colouring; and
(j) flavouring
wherein the first, second, third and fourth plant proteins are different plant proteins.

Optionally, the cooked meat substitute comprises:
(a) water;
(b) a first plant protein
(c) a second plant protein;
(d) a third plant protein;
(e) a first thickener;
(f) a second thickener;
(g) a fibre;
(h) a fat;
(i) colouring; and
(j) flavouring.

Preferably, the cooked meat substitute comprises:
(a) water;
(b) a first plant protein
(c) a second plant protein;
(d) a third plant protein;
(e) a first thickener;
(f) a second thickener;
(g) a fibre;
(h) a fat;
(i) colouring; and
(j) flavouring
wherein the first, second and third plant proteins are different plant proteins and the first and second thickeners and different thickeners.

Further preferably, the cooked meat substitute comprises:
(a) water;
(b) a first plant protein
(c) a second plant protein;
(d) a third plant protein;
(e) a fourth plant protein;
(f) a first thickener;
(g) a second thickener;
(h) a fibre;
(i) a fat;
(j) colouring; and
(k) flavouring
wherein the first, second, third and fourth plant proteins are different plant proteins and the first and second thickeners and different thickeners.

Preferably, the colouring is EXBERRY^{®} Shade Fiesta Pink Powder.

Further preferably, the colouring is EXBERRY^{®} Shade Fiesta Pink Powder GNT Product No. 51420002.

Even further preferably, the colouring is EXBERRY^{®} Shade Fiesta Pink Powder GNT Product No. 51420002 manufactured from radish apple and blackcurrant.

Even further preferably, the colouring is EXBERRY^{®} Shade Fiesta Pink Powder GNT Product No. 51420002 manufactured from radish apple and blackcurrant and processed with water, maltodextrin and citric acid.

Optionally, the cooked meat substitute comprises 3.5-6.0%w/w flavouring, optionally 3.5-5.5%w/w flavouring, optionally 3.5-5.0%w/w flavouring, optionally 3.5-4.5%w/w flavouring.

Preferably, the cooked meat substitute comprises 3.5-4.8%w/w flavouring.

Optionally, the cooked meat substitute comprises 0.10-1.20%%w/w colouring; optionally 0.2-1.1%%w/w colouring. 0.3-1.1%%w/w colouring, 0.4-1.0%%w/w colouring.

Preferably, the cooked meat substitute comprises 0.4-0.9%w/w colouring.

Optionally, the cooked meat substitute further comprises an acidity regulator.

Optionally, the cooked meat substitute further comprises an acidity regulator selected from any one or more citric acid, lactic acid and acetic acid.

Optionally, the cooked meat substitute comprises 0.01-2.00%w/w acidity regulator; optionally 0.02-1.50%w/w acidity regulator, optionally 0.04-1.00%w/w acidity regulator, optionally 0.08-0.50%w/w acidity regulator.

Preferably, the cooked meat substitute comprises 0.08%w/w acidity regulator.

Preferably, the acidity regulator is citric acid.

Optionally, the cooked meat substitute is a cooked ham substitute.

Optionally, the cooked ham substitute comprises 3.5-6.0%w/w flavouring, optionally 3.5-5.5%w/w flavouring, optionally 3.5-5.0%w/w flavouring, optionally 3.5-4.5%w/w flavouring.

Preferably, the cooked ham substitute comprises 3.51%w/w flavouring.

Optionally, the cooked ham substitute comprises 4.04%w/w flavouring comprising salt, base ham flavour, boiled ham flavour, gammon flavour, yeast extract and natural flavourings.

Preferably, the cooked ham substitute comprises 3.51%w/w flavouring comprising 1.67%w/w salt, 0.41%w/w base ham flavour, 0.83%w/w boiled ham flavour, 0.30%w/w gammon flavour and 0.30%w/w yeast extract.

Optionally, the cooked ham substitute comprises 0.1-1.2%%w/w colouring; optionally 0.2-1.1%%w/w colouring. 0.3-1.1%%w/w colouring, 0.4-1.0%%w/w colouring.

Preferably, the cooked ham substitute comprises 0.90%w/w colouring.

Optionally, the cooked ham substitute comprises:
(a) 60-67%w/w water;
(b) 8-16%w/w of a first plant protein;
(c) 2.8-4.6%w/w of a second plant protein;
(d) 0.6-2.2%w/w of a third plant protein;
(e) 2-11%w/w of a first thickener;
(f) 0.8-2.2%w/w of a second thickener;
(g) 0.2-2.0%w/w of a fibre;
(h) 0.6-6.0%w/w of a fat;
(i) 3.5-6.0%w/w flavouring;
(j) 0.2-1.2%w/w colouring; and
(k) 0.01-2.00%w/w acidity regulator

Preferably, the cooked ham substitute comprises:
(a) 64%w/w water;
(b) 10%w/w of a first plant protein;
(c) 3%w/w of a second plant protein;
(d) 1%w/w of a third plant protein;
(e) 9%w/w of a first thickener;
(f) 2%w/w of a second thickener;
(g) 1%w/w of a fibre;
(h) 4%w/w of a fat;
(i) 3%w/w flavouring;
(j) 1%w/w colouring; and
(k) 1%w/w acidity regulator.

Further preferably, the cooked ham substitute comprises:
(a) 64.5%w/w water;
(b) 10.91%w/w of a first plant protein;
(c) 3.71%w/w of a second plant protein;
(d) 0.94%w/w of a third plant protein;
(e) 9.42%w/w of a first thickener;
(f) 1.87%w/w of a second thickener;
(g) 0.19%w/w of a fibre;
(h) 3.97%w/w of a fat;
(i) 3.51%w/w flavouring;
(j) 0.90%w/w colouring; and
(k) 0.08%w/w acidity regulator.

Even further preferably, the cooked ham substitute comprises:
(a) 64.5%w/w water;
(b) 10.91%w/w of a first plant protein;
(c) 3.712%w/w of a second plant protein;
(d) 0.942%w/w of a third plant protein;
(e) 9.421%w/w of a first thickener;
(f) 1.866%w/w of a second thickener;
(g) 0.189%w/w of a fibre;
(h) 3.97%w/w of a fat;
(i) 3.51%w/w flavouring;
(j) 0.9%w/w colouring; and
(k) 0.08%w/w acidity regulator.

Optionally, the cooked meat product is a cooked beef substitute.

Optionally, the cooked beef substitute comprises 3.5-6.0%w/w flavouring, optionally 3.5-5.5%w/w flavouring, optionally 3.5-5.0%w/w flavouring, optionally 3.5-4.5%w/w flavouring.

Preferably, the cooked beef substitute comprises 5.7%w/w flavouring.

Optionally, the cooked beef substitute comprises 5.7%w/w flavouring comprising salt, beef roast flavour, beef flavour, roasted meat flavour, juicy beef marrow flavour, Savarome RBN, Oven roast extract, citric acid and barley malt extract.

Preferably, the cooked beef substitute comprises 5.7%w/w flavouring comprising 1.08%w/w salt, 1 1.40%w/w beef roast flavour, 0.35%w/w beef flavour, 0.70%w/w roasted meat flavour, 0.70%w/w juicy beef marrow flavour, 0.23%w/w Savarome RBN, 0.23%w/w Oven roast extract, 0.12%w/w citric acid and 0.35%w/w barley malt extract.

Optionally, the cooked beef substitute comprises 0.1-1.2%%w/w colouring; optionally 0.2-1.1%%w/w colouring. 0.3-1.1%%w/w colouring, 0.4-1.0%%w/w colouring.

Preferably, the cooked beef substitute comprises 0.43%w/w colouring.

Optionally, the cooked beef substitute comprises:
(a) 60-67%w/w water;
(b) 8-16%w/w of a first plant protein;
(c) 2.8-4.6%w/w of a second plant protein;
(d) 0.6-2.2%w/w of a third plant protein;
(e) 2-11%w/w of a first thickener;
(f) 0.8-2.2%w/w of a second thickener;
(g) 0.2-2.0%w/w of a fibre;
(h) 0.6-6.0%w/w of a fat;
(i) 0.1-6.0%w/w flavouring;
(j) 0.1-0.6%w/w colouring; and
(k) 0.01-2.00%w/w acidity regulator.

Preferably, the cooked beef substitute comprises:
(a) 65%w/w water;
(b) 11%w/w of a first plant protein;
(c) 3%w/w of a second plant protein;
(d) 1%w/w of a third plant protein;
(e) 8%w/w of a first thickener;
(f) 2%w/w of a second thickener;
(g) 1%w/w of a fibre;
(h) 3%w/w of a fat; and
(i) 1%w/w colouring;
(j) 4%w/w flavouring.; and
(k) 1%w/w acidity regulator.

Further preferably, the cooked beef substitute comprises:
(a) 65.05%w/w water;
(b) 10.86%w/w of a first plant protein;
(c) 3.39%w/w of a second plant protein;
(d) 0.86%w/w of a third plant protein;
(e) 8.6%w/w of a first thickener;
(f) 1.7%w/w of a second thickener;
(g) 0.17%w/w of a fibre;
(h) 3.23%w/w of a fat; and
(i) 0.43%w/w colouring;
(j) 5.59%w/w flavouring.; and
(k) 0.11 %w/w acidity regulator.

Even further preferably, the cooked beef substitute comprises:
(a) 65.054%w/w water;
(b) 10.86%w/w of a first plant protein;
(c) 3.389%w/w of a second plant protein;
(d) 0.86%w/w of a third plant protein;
(e) 8.604%w/w of a first thickener;
(f) 1.704%w/w of a second thickener;
(g) 0.173%w/w of a fibre;
(h) 3.226%w/w of a fat; and
(i) 0.43%w/w colouring;
(j) 5.589%w/w flavouring.; and
(k) 0.11 %w/w acidity regulator.

Optionally, the cooked meat product is a chicken substitute.

Optionally, the cooked chicken substitute comprises 2.7-6.0%w/w flavouring, optionally 2.8-5.5%w/w flavouring, optionally 2.9-5.0%w/w flavouring, optionally 3.0-4.5%w/w flavouring, optionally 3.1-4.0%w/w flavouring, optionally 3.2-3.8%w/w flavouring, optionally 3.3-3.6%w/w flavouring, optionally 3.4-3.6%w/w flavouring.

Preferably, the cooked chicken substitute comprises 4.05%w/w flavouring.

Optionally, the cooked chicken substitute comprises 4.05%w/w flavouring comprising salt, yeast extract, chicken flavour and natural flavourings.

Preferably, the cooked chicken substitute comprises 4.05%w/w flavouring 0.60%w/w salt, 0.90w/w yeast extract, 2.09%w/w chicken flavour and 0.46%w/w natural flavourings.

Optionally, the cooked chicken substitute comprises:
(a) 60-67%w/w water;
(b) 8-16%w/w of a first plant protein;
(c) 2.8-4.6%w/w of a second plant protein;
(d) 0.6-2.2%w/w of a third plant protein;
(e) 2-11 %w/w of a first thickener;
(f) 0.8-2.2%w/w of a second thickener;
(g) 0.6-2.0%w/w of a fibre;
(h) 0.1-6.0%w/w of a fat; and
(i) 2.7-6.0%w/w flavouring.

Preferably, the cooked chicken substitute comprises:
(a) 63%w/w water;
(b) 15%w/w of a first plant protein;
(c) 3%w/w of a second plant protein;
(d) 1%w/w of a third plant protein;
(e) 8%w/w of a first thickener;
(f) 1%w/w of a second thickener;
(g) 1%w/w of a fibre;
(h) 4%w/w of a fat; and
(i) 4%w/w flavouring.

Further preferably, the cooked chicken substitute comprises:
(a) 62.77%w/w water;
(b) 14.95%w/w of a first plant protein;
(c) 3.16%w/w of a second plant protein;
(d) 0.80%w/w of a third plant protein;
(e) 8.04%w/w of a first thickener;
(f) 1.59%w/w of a second thickener;
(g) 0.16%w/w of a fibre;
(h) 4.48%w/w of a fat; and
(i) 4.05%w/w flavouring.

Even further preferably, the cooked chicken substitute comprises:
(a) 62.77%w/w water;
(b) 14.95%w/w of a first plant protein;
(c) 3.16%w/w of a second plant protein;
(d) 0.801%w/w of a third plant protein;
(e) 8.037%w/w of a first thickener;
(f) 1.592%w/w of a second thickener;
(g) 0.16%w/w of a fibre;
(h) 4.40%w/w of a fat; and
(i) 4.05%w/w flavouring.

Optionally, the cooked beef substitute further comprises mushroom stock.

Optionally, the cooked beef substitute further comprises 0.1-5.0%w/w mushroom stock, optioanlly 0.4-4.8%w/w mushroom stock, optionally 0.7-4.6%w/w mushroom stock, optionally 1.0-4.4%w/w mushroom stock, optionally 1.4-4.3%w/w mushroom stock, optionally 1.8-4.2%w/w mushroom stock, optionally 2.2-4.1%w/w mushroom stock, optionally 2.6-4.0%w/w mushroom stock, optionally 3.0-3.9%w/w mushroom stock, optionally 3.4-3.9%w/w mushroom stock.

Prefreably, the cooked beef substitute further comprises 3.7%w/w mushroom stock.

Optionally, the cooked beef substitute comprises:
(a) 60-67%w/w water;
(b) 8-16%w/w of a first plant protein;
(c) 2.8-4.6%w/w of a second plant protein;
(d) 0.6-2.2%w/w of a third plant protein;
(e) 2-11 %w/w of a first thickener;
(f) 0.8-2.2%w/w of a second thickener;
(g) 0.2-2.0%w/w of a fibre;
(h) 0.6-6.0%w/w of a fat;
(i) 0.1-6.0%w/w flavouring;
(j) 0.1-0.6%w/w colouring;
(k) 0.01-2.00%w/w acidity regulator
(l) 0.1-5.0%w/w mushroom stock.

Preferably, the cooked beef substitute comprises:
(a) 60%w/w water;
(b) 11%w/w of a first plant protein;
(c) 4%w/w of a second plant protein;
(d) 1%w/w of a third plant protein;
(e) 9%w/w of a first thickener;
(f) 1%w/w of a second thickener;
(g) 1%w/w of a fibre;
(h) 3%w/w of a fat; and
(i) 1%w/w colouring;
(j) 5%w/w flavouring;
(k) 1%w/w acidity regulator; and
(l) 3%w/w mushroom stock.

Further preferably, the cooked beef substitute comprises:
(a) 60.05%w/w water;
(b) 10.86%w/w of a first plant protein;
(c) 3.38%w/w of a second plant protein;
(d) 0.86%w/w of a third plant protein;
(e) 8.604%w/w of a first thickener;
(f) 1.70%w/w of a second thickener;
(g) 0.17%w/w of a fibre;
(h) 3.22%w/w of a fat; and
(i) 0.43%w/w colouring;
(j) 5.36%w/w flavouring;
(k) 0.11 %w/w acidity regulator; and
(l) 3.82%w/w mushroom stock.

Even further preferably, the cooked beef substitute comprises:
(a) 60.054%w/w water;
(b) 10.86%w/w of a first plant protein;
(c) 3.389%w/w of a second plant protein;
(d) 0.86%w/w of a third plant protein;
(e) 8.604%w/w of a first thickener;
(f) 1.704%w/w of a second thickener;
(g) 0.173%w/w of a fibre;
(h) 3.226%w/w of a fat; and
(i) 0.430%w/w colouring;
(j) 5.364%w/w flavouring;
(k) 0.11%w/w acidity regulator; and
(l) 3.826%w/w mushroom stock.

Optionally, the cooked beef substitute further comprises a fourth plant protein.

Optionally, the cooked beef substitute further comprises a fourth plant protein, wherein the fourth plant protein is wheat protein.

Optionally, the fourth plant protein comprises 0.1-5.0%w/w wheat protein; optionally 0.7-4.5%w/w wheat protein, optionally 1.3-4.0%w/w wheat protein, optionally 2.0-3.5%w/w wheat protein, optionally 2.7-3.5%w/w wheat protein.

Preferably, the fourth plant protein comprises 3.3%w/w wheat protein.

Optionally, the wheat protein comprises wheat gluten, wheat starch and firming agent (E516).

Optionally, the cooked beef substitute comprises:
(a) 60-67%w/w water;
(b) 8-16%w/w of a first plant protein;
(c) 2.8-4.6%w/w of a second plant protein;
(d) 0.6-2.2%w/w of a third plant protein;
(e) 2-11 %w/w of a first thickener;
(f) 0.8-2.2%w/w of a second thickener;
(g) 0.2-2.0%w/w of a fibre;
(h) 0.6-6.0%w/w of a fat;
(i) 0.1-6.0%w/w flavouring;
(j) 0.1-0.6%w/w colouring;
(k) 0.01-2.00%w/w acidity regulator
(l) 0.1-5.0%w/w mushroom stock;
(m) 0.1-5.0%w/w of a fourth plant protein.

Preferably, the cooked beef substitute comprises:
(a) 60%w/w water;
(b) 10%w/w of a first plant protein;
(c) 3%w/w of a second plant protein;
(d) 1%w/w of a third plant protein;
(e) 8%w/w of a first thickener;
(f) 1%w/w of a second thickener;
(g) 1%w/w of a fibre;
(h) 3%w/w of a fat; and
(i) 1%w/w colouring;
(j) 5%w/w flavouring;
(k) 1%w/w acidity regulator
(l) 4%w/w mushroom stock; and
(m) 3%w/w of a fourth plant protein.

Further preferably, the cooked beef substitute comprises:
(a) 60.5%w/w water;
(b) 10.1%w/w of a first plant protein;
(c) 3.15%w/w of a second plant protein;
(d) 0.8%w/w of a third plant protein;
(e) 8.0%w/w of a first thickener;
(f) 1.59%w/w of a second thickener;
(g) 0.16%w/w of a fibre;
(h) 3%w/w of a fat; and
(i) 0.4%w/w colouring;
(j) 5.19%w/w flavouring;
(k) 0.11 %w/w acidity regulator
(l) 3.7%w/w mushroom stock; and
(m) 3.3%w/w of a fourth plant protein.

Even further preferably, the cooked beef substitute comprises:
(a) 60.5%w/w water;
(b) 10.1%w/w of a first plant protein;
(c) 3.152%w/w of a second plant protein;
(d) 0.8%w/w of a third plant protein;
(e) 8.002%w/w of a first thickener;
(f) 1.585%w/w of a second thickener;
(g) 0.161%w/w of a fibre;
(h) 3%w/w of a fat; and
(i) 0.4%w/w colouring;
(j) 5.19%w/w flavouring;
(k) 0.11 %w/w acidity regulator
(l) 3.7%w/w mushroom stock; and
(m) 3.3%w/w of a fourth plant protein.

Optionally, the method comprises the steps of:
(a) providing water;
(b) adding the at least one plant protein to the water and mixing to form a first mixture;
(c) adding the at least one thickener and the fibre to the first mixture, and further mixing to form a second mixture;
(d) adding the fat to the second mixture and further mixing to form a third mixture; and
(e) cooking the third mixture to form a cooked meat substitute.

Optionally, the method comprises the steps of:
(a) providing water;
(b) adding the first plant protein to the water and mixing to form a first mixture;
(c) adding the second plant protein, the third plant protein, the at least one thickener and the fibre to the first mixture, and further mixing to form a second mixture;
(d) adding the fat to the second mixture and further mixing to form a third mixture; and
(e) cooking the third mixture to form a cooked meat substitute.

Preferably, the method comprises the steps of:
(a) providing water;
(b) adding the first plant protein to the water and mixing to form a first mixture;
(c) adding the second plant protein, the third plant protein, the first thickener, the second thickener and the fibre to the first mixture, and further mixing to form a second mixture;
(d) adding the fat to the second mixture and further mixing to form a third mixture; and
(e) cooking the third mixture to form a cooked meat substitute.

Optionally, the method comprises the steps of:
(a) providing water;
(b) adding textured soy protein to the water and mixing to form a first mixture;
(c) adding soy protein isogel, potato protein, gluten, carrageenan and the fibre to the first mixture, and further mixing to form a second mixture;
(d) adding the fat to the second mixture and further mixing to form a third mixture; and
(e) cooking the third mixture to form a cooked meat substitute.

Optionally, the method comprises the steps of:
(a) providing water;
(b) adding textured soy protein to the water and mixing to form a first mixture;
(c) adding soy protein isogel, potato protein, wheat gluten, kappa-carrageenan and bamboo fibre to the first mixture, and further mixing to form a second mixture;
(d) adding the fat to the second mixture and further mixing to form a third mixture; and
(e) cooking the third mixture to form a cooked meat substitute.

Optionally, the method comprises the steps of:
(a) providing water;
(b) adding textured soy protein to the water and mixing to form a first mixture;
(c) adding soy protein isogel, potato protein, wheat gluten, kappa-carrageenan and bamboo fibre to the first mixture, and further mixing to form a second mixture;
(d) adding vegetable oil to the second mixture and further mixing to form a third mixture; and
(e) cooking the third mixture to form a cooked meat substitute.

Optionally, the method comprises the steps of:
(a) providing water;
(b) adding textured soy protein to the water and mixing to form a first mixture;
(c) adding soy protein isogel, potato protein, wheat gluten, kappa-carrageenan and bamboo fibre to the first mixture, and further mixing to form a second mixture;
(d) adding seed oil to the second mixture and further mixing to form a third mixture; and
(e) cooking the third mixture to form a cooked meat substitute.

Optionally, the method comprises the steps of:
(a) providing water;
(b) adding textured soy protein to the water and mixing to form a first mixture;
(c) adding soy protein isogel, potato protein, wheat gluten, kappa-carrageenan and bamboo fibre to the first mixture, and further mixing to form a second mixture;
(d) adding rapeseed oil to the second mixture and further mixing to form a third mixture; and
(e) cooking the third mixture to form a cooked meat substitute.

Optionally, the method comprises the steps of:
(a) providing 60-67%w/w water;
(b) adding 8-16%w/w of the first plant protein to the water and mixing to form a first mixture;
(c) adding 2.8-4.0%w/w of the second plant protein, 0.6-2.0%w/w of the third plant protein, 2-11%w/w of the first thickener, 0.8-2.2%w/w of the second thickener and 0.2-2.0%w/w of fibre to the first mixture, and further mixing to form a second mixture;
(d) adding 0.6-6.0%w/w of the fat to the second mixture and further mixing to form a third mixture; and
(e) cooking the third mixture to form a cooked meat substitute.

Optionally, the method comprises the steps of:
(a) providing 60-67%w/w water;
(b) adding 8-16%w/w of the first plant protein to the water and mixing to form a first mixture;
(c) adding 2.8-4.6%w/w of the second plant protein, 0.6-2.2%w/w of the third plant protein, 2-11%w/w of the first thickener, 0.8-2.2%w/w of the second thickener and 0.2-2.0%w/w of the fibre to the first mixture, and further mixing to form a second mixture;
(d) adding 0.6-6.0%w/w of the seed oil to the second mixture and further mixing to form a third mixture; and
(e) cooking the third mixture to form a cooked meat substitute.

Preferably, the method comprises the steps of:
(a) providing 60-67%w/w water;
(b) adding 8-16%w/w of the first plant protein to the water and mixing to form a first mixture;
(c) adding 2.8-4.6%w/w of the second plant protein, 0.6-2.2%w/w of the third plant protein, 2-11%w/w of the first thickener, 0.8-2.2%w/w of the second thickener and 0.2-2.0%w/w of the fibre to the first mixture, and further mixing to form a second mixture;
(d) adding 0.6-6.0%w/w of the rapeseed oil to the second mixture and further mixing to form a third mixture; and
(e) cooking the third mixture to form a cooked meat substitute.

Further preferably, the method comprises the steps of:
(a) providing 60-67%w/w water;
(b) adding 8-16%w/w textured soy protein to the water and mixing to form a first mixture;
(c) adding 2.8-4.6%w/w soy protein isogel, 0.6-2.20%w/w potato protein, 2-11 %w/w wheat gluten, 0.8-2.2%w/w kappa-carrageenan and 0.2-2.0%w/w bamboo fibre to the first mixture, and further mixing to form a second mixture;
(d) adding 0.6-6.0%w/w rapeseed oil to the second mixture and further mixing to form a third mixture; and
(e) cooking the third mixture to form a cooked meat substitute.

Optionally, the method comprises the steps of:
(a) providing 60-67%w/w water;
(b) adding 8-16%w/w of the first plant protein to the water and mixing for 16 minutes until hydrated to form a first mixture;
(c) adding 2.8-4.6%w/w of the second plant protein, 0.6-2.2%w/w of the third plant protein, 2-11%w/w of the first thickener, 0.8-2.2%w/w of the second thickener and the fibre to the first mixture, and further mixing to form a second mixture;
(d) adding 0.6-6.0%w/w to the second mixture and further mixing to form a third mixture; and
(e) cooking the third mixture to form a cooked meat substitute.

Optionally, the method comprises the steps of:
(a) providing 60-67%w/w water;
(b) adding 8-16%w/w textured soy protein to the water and mixing for 16 minutes until hydrated to form a first mixture;
(c) adding 2.8-4.6%w/w soy protein isogel, 0.6-2.2%w/w potato protein, 2-11%w/w wheat gluten, 0.8-2.2%w/w kappa-carrageenan and 0.2-2.0%w/w bamboo fibre to the first mixture, and further mixing to form a second mixture;
(d) adding 0.6-6.0%w/w rapeseed oil to the second mixture and further mixing to form a third mixture; and
(e) cooking the third mixture to form a cooked meat substitute.

Optionally, the method comprises the steps of:
(a) providing 60 -67%w/w water;
(b) adding 8-16%w/w of the first plant protein to the water and mixing for 16 minutes until hydrated to form a first mixture;
(c) adding 2.8-4.6%w/w of the second plant protein, 0.6-2.2%w/w of the third plant protein, 2-11%w/w of the first thickener, 0.8-2.2%w/w of the second thickener and the fibre to the first mixture, and further mixing for 9 minutes until hydrated to form a second mixture;
(d) adding 0.6-6.0%w/w of the fat and further mixing to form a third mixture; and
(e) cooking the third mixture to form a cooked meat substitute.

Optionally, the method comprises the steps of:
(a) providing 60-67%w/w water;
(b) adding 8-16%w/w textured soy protein to the water and mixing for 16 minutes until hydrated to form a first mixture;
(c) adding 2.8-4.6%w/w soy protein isogel, 0.6-2.2%w/w potato protein, 2-11%w/w wheat gluten, 0.8-2.2%w/w kappa-carrageenan and 0.2-2.0%w/w bamboo fibre to the first mixture, and further mixing for 9 minutes until hydrated to form a second mixture;
(d) adding 0.6-6.0%w/w rapeseed oil and further mixing to form a third mixture and
(e) cooking the third mixture to form a cooked meat substitute.

Preferably, the method comprises the steps of:
(a) providing 60-67%w/w water;
(b) adding 8-16%w/w of the first plant protein to the water and mixing for 16 minutes until hydrated to form a first mixture;
(c) adding 2.8-4.6%w/w of the second plant protein, 0.6-2.2%w/w of the third plant protein, 2-11%w/w of the first thickener, 0.8-2.2%w/w of the second thickener and the fibre to the first mixture, and further mixing for 9 minutes until hydrated to form a second mixture;
(d) adding 0.6-6.0%w/w of the fat and further mixing for 5 minutes to form a third mixture; and
(e) cooking the third mixture to form a cooked meat substitute.

Optionally, the method comprises the steps of:
(a) providing 60-67%w/w water;
(b) adding 8-16%w/w textured soy protein to the water and mixing for 16 minutes until hydrated to form a first mixture;
(c) adding 2.8-4.6%w/w soy protein isogel, 0.6-2.2%w/w potato protein, 2-11 %w/w wheat gluten, 0.8-2.2%w/w kappa-carrageenan and 0.2-2.0%w/w bamboo fibre to the first mixture, and further mixing for 9 minutes until hydrated to form a second mixture;
(d) adding 0.6-6.0%w/w rapeseed oil and further mixing for 5 minutes to form a third mixture; and
(e) cooking the third mixture to form a cooked meat substitute.

Preferably, the method comprises the steps of:
(a) providing 60-67%w/w water;
(b) adding 8-16%w/w textured soy protein to the water and mixing for 16 minutes until hydrated to form a first mixture;
(c) adding 2.8-4.6%w/w soy protein isogel, 0.6-2.2%w/w potato protein, 2-11%w/w wheat gluten, 0.8-2.2%w/w kappa-carrageenan and 0.2-2.0%w/w bamboo fibre to the first mixture, and further mixing for 9 minutes until hydrated to form a second mixture;
(d) adding 0.6-6.0%w/w rapeseed oil and further mixing for 5 minutes to form a third mixture; and
(e) cooking the third mixture at 92°C in a steam oven for 3 hours to form a cooked meat substitute.

Optionally, the method further comprises the step of forming a 95mm log.

Optioanlly, the method comprises the steps of:
(a) providing 60-67%w/w water;
(b) adding 8-16%w/w textured soy protein to the water and mixing for 16 minutes until hydrated to form a first mixture;
(c) adding 2.8-4.6%w/w soy protein isogel, 0.6-2.2%w/w potato protein, 2-11 %w/w wheat gluten, 0.8-2.2%w/w kappa-carrageenan and 0.2-2.0%w/w bamboo fibre to the first mixture, and further mixing for 9 minutes until hydrated to form a second mixture;
(d) adding 0.6-6.0%w/w rapeseed oil and further mixing for 5 minutes to form a third mixture;
(e) forming a 95mm log with the third mixture; and
(f) cooking the third mixture at 92°C in a steam oven for 3 hours to form a cooked meat substitute.

Optionally, there is provided a method of preparing a cooked ham substitute.

Optionally, the method of preparing a cooked ham substitute comprises:
(a) providing 60-67%w/w water and 2-1.2.0%w/w colouring;
(b) adding 8-16%w/w textured soy protein to the water and colouring and mixing for 16 minutes until hydrated to form a first mixture;
(c) adding 2.8-4.6%w/w soy protein isogel, 0.6-2.2%w/w potato protein, 2-11%w/w wheat gluten, 0.8-2.2%w/w kappa-carrageenan and 0.2-2.0%w/w bamboo fibre to the first mixture, and further mixing for 9 minutes until hydrated to form a second mixture;
(d) adding 0.6-6.0%w/w rapeseed oil and further mixing for 5 minutes to form a third mixture; and
(e) cooking the third mixture to form a cooked ham substitute.

Optionally, the method of preparing a cooked ham substitute comprises:
(a) providing 60-67%w/w water and 0.2-1.2%w/w colouring;
(b) adding 8-16%w/w textured soy protein to the water and colouring and mixing for 16 minutes until hydrated to form a first mixture;
(c) adding 2.8-4.6%w/w soy protein isogel, 0.6-2.2%w/w potato protein, 2-11%w/w wheat gluten, 0.8-2.2%w/w kappa-carrageenan and 0.2-2.0%w/w bamboo fibre to the first mixture, and further mixing for 9 minutes until hydrated to form a second mixture;
(d) adding 0.6-6.0%w/w rapeseed oil and further mixing for 5 minutes to form a third mixture; and
(e) cooking the third mixture at 92°C in a steam oven for 3 hours to form a cooked ham substitute.

Optionally, the method of preparing a cooked ham substitute comprises:
(a) providing 60-67%w/w water and 0.2-1.2%w/w colouring and mixing for 5 minutes to form a first mixture;
(b) adding 8-16%w/w textured soy protein to the first mixture and mixing for 16 minutes until hydrated to form a second mixture;
(c) adding 2.8-4.6%w/w soy protein isogel, 0.6-2.2%w/w potato protein, 2-11 %w/w wheat gluten, 0.8-2.2%w/w kappa-carrageenan and 0.2-2.0%w/w bamboo fibre and 3.5-6.0%w/w flavouring to the second mixture, and further mixing for 9 minutes until hydrated to form a third mixture;
(d) adding 0.6-6.0%w/w rapeseed oil to the third mixture and further mixing for 5 minutes to form a fourth mixture; and
(e) cooking the fourth mixture at 92°C in a steam oven for 3 hours to form a cooked ham substitute.

Optionally, the method of preparing a cooked ham substitute comprises:
(a) providing 60-67%w/w water and 0.2-1.2%w/w colouring and mixing for 5 minutes to form a first mixture;
(b) adding 8-16%w/w textured soy protein to the to the first mixture and mixing for 16 minutes until hydrated to form a second mixture;
(c) adding 2.8-4.6%w/w soy protein isogel, 0.6-2.2%w/w potato protein, 2-11%w/w wheat gluten, 0.8-2.2%w/w kappa-carrageenan and 0.2-2.0%w/w bamboo fibre and 4.04%w/w flavouring comprising 1.66%w/w salt, 0.41%w/w base ham flavour, 0.83%w/w boiled ham flavour, 0.30%w/w gammon flavour, 0.30%w/w yeast extract and 0.45%w/w natural flavourings to the second mixture, and further mixing for 9 minutes until hydrated to form a third mixture;
(d) adding 0.6-6.0%w/w rapeseed oil to the third mixture and further mixing for 5 minutes to form a fourth mixture; and
(e) cooking the fourth mixture at 92°C in a steam oven for 3 hours to form a cooked ham substitute.

Preferably, the method of preparing a cooked ham substitute comprises:
(a) providing 60-67%w/w water and 0.2-1.2%w/w colouring and mixing for 5 minutes to form a first mixture;
(b) adding 8-16%w/w first plant protein to the first mixture and mixing for 16 minutes until hydrated to form a second mixture;
(c) adding 2.8-4.6%w/w second plant protein, 0.6-2.2%w/w third plant protein, 2-11 %w/w first thickener, 0.8-2.2%w/w second thickener, 0.2-2.0%w/w the fibre and 4.04%w/w flavouring comprising 1.66%w/w salt, 0.41%w/w base ham flavour, 0.83%w/w boiled ham flavour, 0.30%w/w gammon flavour, 0.30%w/w yeast extract and 0.45%w/w natural flavourings to the second mixture, and further mixing for 9 minutes until hydrated to form a third mixture;
(d) adding 0.6-6.0%w/w rapeseed oil to the third mixture and further mixing for 5 minutes to form a fourth mixture;
(e) forming a 95mm log with the fourth mixture; and
(f) cooking the fourth mixture at 92°C in a steam oven for 3 hours to form a cooked ham substitute.

Preferably, the method of preparing a cooked ham substitute comprises:
(a) providing 64.5%w/w water and 0.9%w/w colouring and mixing for 5 minutes to form a first mixture;
(b) adding 10.91%w/w textured soy protein to the first mixture and mixing for 16 minutes until hydrated to form a second mixture;
(c) adding 3.71%w/w soy protein isogel, 0.94%w/w potato protein, 9.42%w/w wheat gluten, 1.87%w/w kappa-carrageenan and 0.19%w/w bamboo fibre and 3.51%w/w flavouring comprising 1.67%w/w salt, 0.41%w/w base ham flavour, 0.83%w/w boiled ham flavour, 0.30%w/w gammon flavour and 0.30%w/w yeast extract to the second mixture, and further mixing for 9 minutes until hydrated to form a third mixture;
(d) adding 3.97%w/w rapeseed oil to the third mixture and further mixing for 5 minutes to form a fourth mixture;
(e) forming a 95mm log with the fourth mixture; and
(f) cooking the fourth mixture at 92°C in a steam oven for 3 hours to form a cooked ham substitute.

Further preferably, the method of preparing a cooked ham substitute comprises:
(a) providing 64.5%w/w water and 0.9%w/w colouring and mixing for 5 minutes to form a first mixture;
(b) adding 10.91%w/w textured soy protein to the first mixture and mixing for 16 minutes until hydrated to form a second mixture;
(c) adding 3.712%w/w soy protein isogel, 0.942%w/w potato protein, 9.421%w/w wheat gluten, 1.866%w/w kappa-carrageenan and 0.189%w/w bamboo fibre and 3.510%w/w flavouring comprising 1.67%w/w salt, 0.41%w/w base ham flavour, 0.83%w/w boiled ham flavour, 0.30%w/w gammon flavour and 0.30%w/w yeast extract to the second mixture, and further mixing for 9 minutes until hydrated to form a third mixture;
(d) adding 3.97%w/w rapeseed oil to the third mixture further mixing for 5 minutes to form a fourth mixture;
(e) forming a 95mm log with the fourth mixture; and
(f) cooking the fourth mixture at 92°C in a steam oven for 3 hours to form a cooked ham substitute.

Optionally, there is provided a method of preparing a cooked beef substitute.

Optionally, the method of preparing a cooked beef substitute comprises:
(a) providing 60-67%w/w water, 0.1-0.6%w/w colouring and 0.1-5.0%w/w mushroom stock;
(b) adding 8-16%w/w textured soy protein to the water, colouring and mushroom stock, and mixing for 16 minutes until hydrated to form a first mixture;
(c) adding 2.8-4.6%w/w soy protein isogel, 0.6-2.2%w/w potato protein, 2-11%w/w wheat gluten, 0.8-2.2%w/w kappa-carrageenan and 0.2-2.0%w/w bamboo fibre to the first mixture, and further mixing for 9 minutes until hydrated to form a second mixture;
(d) adding 0.6-6.0%w/w rapeseed oil to the second mixture and further mixing for 5 minutes to form a third mixture; and
(e) cooking the third mixture to form a cooked beef substitute.

Optionally, the method of preparing a cooked beef substitute comprises:
(a) providing 60-67%w/w water, 0.1-0.6%w/w colouring and 0.1-5.0%w/w mushroom stock;
(b) adding 8-16%w/w textured soy protein to the water, colouring and mushroom stock, and mixing for 16 minutes until hydrated to form a first mixture;
(c) adding 2.8-4.6%w/w soy protein isogel, 0.6-2.2%w/w potato protein, 2-11 %w/w wheat gluten, 0.8-2.2%w/w kappa-carrageenan and 0.2-2.0%w/w bamboo fibre to the first mixture, and further mixing for 9 minutes until hydrated to form a second mixture;
(d) adding 0.6-6.0%w/w rapeseed oil to the second mixture and further mixing for 5 minutes to form a third mixture; and
(e) cooking the third mixture at 92°C in a steam oven for 3 hours to form a cooked beef substitute.

Optionally, the method of preparing a cooked beef substitute comprises:
(a) providing 60-67%w/w water and 0.1-0.6%w/w colouring and 0.1-5.0%w/w mushroom stock, and mixing for 5 minutes to form a first mixture;
(b) adding 8-16%w/w textured soy protein to the first mixture, and mixing for 16 minutes until hydrated to form a second mixture;
(c) adding 2.8-4.6%w/w soy protein isogel, 0.6-2.2%w/w potato protein, 2-11 %w/w wheat gluten, 0.8-2.2%w/w kappa-carrageenan and 0.2-2.0%w/w bamboo fibre and 3.5-6.0%w/w flavouring to the second mixture, and further mixing for 9 minutes until hydrated to form a third mixture;
(d) adding 0.6-6.0%w/w rapeseed oil to the third mixture and further mixing for 5 minutes to form a fourth mixture; and
(e) cooking the fourth mixture at 92°C in a steam oven for 3 hours to form a cooked beef substitute.

Optionally, the method of preparing a cooked beef substitute comprises:
(a) providing 60-67%w/w water and 0.1-0.6%w/w colouring and 0.1-5.0%w/w mushroom stock, and mixing for 5 minutes to form a first mixture;
(b) adding 8-16%w/w textured soy protein to the first mixture, and mixing for 16 minutes until hydrated to form a second mixture;
(c) adding 2.8-4.6%w/w soy protein isogel, 0.6-2.2%w/w potato protein, 2-11 %w/w wheat gluten, 0.8-2.2%w/w kappa-carrageenan and 0.2-2.0%w/w bamboo fibre and 4.80%w/w flavouring comprising 0.99%w/w salt, 1.30%w/w beef roast flavour, 0.33%w/w beef flavour, 0.65%w/w roasted meat flavour, 0.65%w/w juicy beef marrow flavour, 0.22%w/w Savarome RBN, 0.22%w/w Oven roast extract, 0.11 %w/w citric acid and 0.33%w/w barley malt extract to the second mixture, and further mixing for 9 minutes until hydrated to form a third mixture;
(d) adding 0.6-6.0%w/w rapeseed oil to the third mixture and further mixing for 5 minutes to form a fourth mixture; and
(e) cooking the fourth mixture to form a cooked beef substitute.

Optionally, the method of preparing a cooked beef substitute comprises:
(a) providing 60-67%w/w water and 0.1-0.6%w/w colouring and 0.1-5.0%w/w mushroom stock, and mixing for 5 minutes to form a first mixture;
(b) adding 8-16%w/w textured soy protein to the first mixture, and mixing for 16 minutes until hydrated to form a second mixture;
(c) adding 2.8-4.6%w/w soy protein isogel, 0.6-2.2%w/w potato protein, 2-11%w/w wheat gluten, 0.8-2.2%w/w kappa-carrageenan and 0.2-2.0%w/w bamboo fibre and 4.80%w/w flavouring comprising 0.99%w/w salt, 1.30%w/w beef roast flavour, 0.33%w/w beef flavour, 0.65%w/w roasted meat flavour, 0.65%w/w juicy beef marrow flavour, 0.22%w/w Savarome RBN, 0.22%w/w Oven roast extract, 0.11%w/w citric acid and 0.33%w/w barley malt extract to the second mixture, and further mixing for 9 minutes until hydrated to form a third mixture;
(d) adding 0.6-6.0%w/w rapeseed oil to the third mixture and further mixing for 5 minutes to form a fourth mixture; and
(e) cooking the fourth mixture at 92°C in a steam oven for 3 hours to form a cooked beef substitute.

Preferably, the method of preparing a cooked beef substitute comprises:
(a) providing 60-67%w/w water and 0.1-0.6%w/w colouring, 0.1-5.0%w/w mushroom stock, and mixing for 5 minutes to form a first mixture;
(b) adding 8-16%w/w textured soy protein to the first mixture, and mixing for 16 minutes until hydrated to form a second mixture;
(c) adding 2.8-4.6%w/w soy protein isogel, 0.6-2.20%w/w potato protein, 2-11 %w/w wheat gluten, 0.8-2.2%w/w kappa-carrageenan and 0.2-2.0%w/w bamboo fibre and 4.80%w/w flavouring comprising 0.99%w/w salt, 1.30%w/w beef roast flavour, 0.33%w/w beef flavour, 0.65%w/w roasted meat flavour, 0.65%w/w juicy beef marrow flavour, 0.22%w/w Savarome RBN, 0.22%w/w Oven roast extract, 0.11%w/w citric acid and 0.33%w/w barley malt extract to the second mixture, and further mixing for 9 minutes until hydrated to form a third mixture;
(d) adding 0.6-6.0%w/w rapeseed oil to the third mixture and further mixing for 5 minutes to form a fourth mixture;
(e) forming a 95mm log with the fourth mixture; and
(f) cooking the fourth mixture at 92°C in a steam oven for 3 hours to form a cooked beef substitute.

Optionally, the method of preparing a cooked beef substitute comprises:
(a) providing 60-67%w/w water and 0.1-0.6%w/w colouring, 0.1-5.0%w/w mushroom stock, and mixing for 3 minutes to form a first mixture;
(b) adding 0.1-5.0%w/w fouth plant protein to the first mixture, and mixing for 2 minutes to form a second mixture;
(c) adding 8-16%w/w first plant protein to the second mixture, and mixing for 16 minutes until hydrated to form a third mixture;
(d) adding 2.8-4.6%w/w second plant protein, 0.6-2.2%w/w third plant protein, 2-11 %w/w first thickener, 0.8-2.2%w/w second thickener, 0.2-2.0%w/w fibre and 3.5-6.0%w/w flavouring to the third mixture, and further mixing for 9 minutes until hydrated to form a fourth mixture;
(e) adding 0.6-6.0%w/w the fat to the fourth mixture and further mixing for 5 minutes to form a fifth mixture; and
(f) cooking the fifth mixture a cooked beef substitute.

Optionally, the method of preparing a cooked beef substitute comprises:
(a) providing 60-67%w/w water and 0.1-0.6%w/w colouring, 0.1-5.0%w/w mushroom stock, and mixing for 3 minutes to form a first mixture;
(b) adding 0.1-5.0%w/w fouth plant protein to the first mixture, and mixing for 2 minutes to form a second mixture;
(c) adding 8-16%w/w first plant protein to the second mixture, and mixing for 16 minutes until hydrated to form a third mixture;
(d) adding 2.8-4.6%w/w second plant protein, 0.6-2.2%w/w third plant protein, 2-11%w/w first thickener, 0.8-2.2%w/w second thickener, 0.2-2.0%w/w fibre and 3.5-6.0%w/w flavouring to the third mixture, and further mixing for 9 minutes until hydrated to form a fourth mixture;
(e) adding 0.6-6.0%w/w the fat to the fourth mixture and further mixing for 5 minutes to form a fifth mixture; and
(f) cooking the fifth mixture at 92°C in a steam oven for 3 hours to form a cooked beef substitute.

Optionally, the method of preparing a cooked beef substitute comprises:
(a) providing 60-67%w/w water and 0.1-0.6%w/w colouring, 0.1-5.0%w/w mushroom stock, and mixing for 3 minutes to form a first mixture;
(b) adding 0.1-5.0%w/w wheat protein to the first mixture, and mixing for 2 minutes to form a second mixture;
(c) adding 8-16%w/w textured soy protein to the second mixture, and mixing for 16 minutes until hydrated to form a third mixture;
(d) adding 2.8-4.6%w/w soy protein isogel, 0.6-2.2%w/w potato protein, 2-11%w/w wheat gluten, 0.8-2.2%w/w kappa-carrageenan and 0.2-2.0%w/w bamboo fibre and 3.5-6.00%w/w flavouring to the third mixture, and further mixing for 9 minutes until hydrated to form a fourth mixture;
(e) adding 0.6-6.0%w/w rapeseed to the fourth mixture and further mixing for 5 minutes to form a fifth mixture;
(f) cooking the fifth mixture to form a cooked beef substitute.

Preferably, the method of preparing a cooked beef substitute comprises:
(a) providing 60-67%w/w water and 0.1-0.6%w/w colouring, 0.1-5.0%w/w mushroom stock, and mixing for 3 minutes to form a first mixture;
(b) adding 0.1-5.0%w/w wheat protein to the first mixture, and mixing for 2 minutes to form a second mixture;
(c) adding 8-16%w/w textured soy protein to the second mixture, and mixing for 16 minutes until hydrated to form a third mixture;
(d) adding 2.8-4.6%w/w soy protein isogel, 0.6-2.2%w/w potato protein, 2-11 %w/w wheat gluten, 0.8-2.2%w/w kappa-carrageenan and 0.2-2.0%w/w bamboo fibre and 3.5-6.00%w/w flavouring to the third mixture, and further mixing for 9 minutes until hydrated to form a fourth mixture;
(e) adding 0.6-6.0%w/w rapeseed to the fourth mixture and further mixing for 5 minutes to form a fifth mixture;
(f) cooking the fifth mixture at 92°C in a steam oven for 3 hours to form a cooked beef substitute.

Optionally, the method of preparing a cooked beef substitute comprises:
(a) providing 60-67%w/w water and 0.1-0.6%w/w colouring, 0.1-5.0%w/w mushroom stock, and mixing for 3 minutes to form a first mixture;
(b) adding 0.1-5.0%w/w wheat protein to the first mixture, and mixing for 2 minutes to form a second mixture;
(c) adding 8-16%w/w textured soy protein to the second mixture, and mixing for 16 minutes until hydrated to form a third mixture;
(d) adding 2.8-4.6%w/w soy protein isogel, 0.6-2.2%w/w potato protein, 2-11%w/w wheat gluten, 0.8-2.2%w/w kappa-carrageenan and 0.2-2.0%w/w bamboo fibre and 3.5-6.00%w/w flavouring to the third mixture, and further mixing for 9 minutes until hydrated to form a fourth mixture;
(e) adding 0.6-6.0%w/w rapeseed to the fourth mixture for 5 minutes to form a fifth mixture;
(f) forming a 95mm log with the fifth mixture; and
(g) cooking the fifth mixture at 92°C in a steam oven for 3 hours to form a cooked beef substitute.

Preferably, the method of preparing a cooked beef substitute comprises:
(a) providing 60-67%w/w water and 0.1-0.6%w/w colouring, 0.1-5.0%w/w mushroom stock, and mixing for 3 minutes to form a first mixture;
(b) adding 0.1-5.0%w/w wheat protein to the first mixture, and mixing for 2 minutes to form a second mixture;
(c) adding 8-16%w/w textured soy protein to the second mixture and wheat protein, and mixing for 16 minutes until hydrated to form a third mixture;
(d) adding 2.8-4.6%w/w soy protein isogel, 0.6-2.2%w/w potato protein, 2-11%w/w wheat gluten, 0.8-2.2%w/w kappa-carrageenan; 0.2-2.0%w/w bamboo fibre and 4.80%w/w flavouring comprising 0.99%w/w salt, 1.30%w/w beef roast flavour, 0.33%w/w beef flavour, 0.65%w/w roasted meat flavour, 0.65%w/w juicy beef marrow flavour, 0.22%w/w Savarome RBN, 0.22%w/w Oven roast extract, 0.11 %w/w citric acid and 0.33%w/w barley malt extract to the third mixture, and further mixing for 9 minutes until hydrated to form a fourth mixture;
(e) adding 0.6-6.0%w/w rapeseed oil to the fourth mixture and further mixing for 5 minutes until hydrated to form a fifth mixture;
(f) forming a 95mm log with the fifth mixture; and
(g) cooking the fifth mixture at 92°C in a steam oven for 3 hours to form a cooked beef substitute.

Further preferably, the method of preparing a cooked beef substitute comprises:
(a) providing 60.5%w/w water and 0.4%w/w colouring, 3.7%w/w mushroom stock, and mixing for 3 minutes to form a first mixture;
(b) adding 3.3%w/w wheat protein to the first mixture, and mixing for 2 minutes to form a second mixture;
(c) adding 10.1%w/w textured soy protein to the second mixture and mixing for 16 minutes until hydrated to form a third mixture;
(d) adding 3.152%w/w soy protein isogel, 0.800%w/w potato protein, 8.002%w/w wheat gluten, 1.585%w/w kappa-carrageenan and 0.161%w/w bamboo fibre and 5.3%w/w flavouring comprising 1.000%w/w salt, 1.303%w/w beef roast flavour, 0.326%w/w beef flavour, 0.651%w/w roasted meat flavour, 0.651%w/w juicy beef marrow flavour, 0.217%w/w Savarome RBN, 0.217%w/w Oven roast extract, 0.109%w/w citric acid and 0.326%w/w barley malt extract to the third mixture, and further mixing for 9 minutes until hydrated to form a fourth mixture;
(e) adding 3%w/w rapeseed oil to the fourth mixture and further mixing for 5 minutes until hydrated to form a fifth mixture;
(f) forming a 95mm log with the fifth mixture; and
(g) cooking the fifth mixture to form a cooked beef substitute.

Optionally, there is provided a method of preparing a cooked chicken substitute.

Optionally, the method of preparing a cooked chicken substitute comprises:
(a) providing 60-67%w/w water;
(b) adding 8-16%w/w textured soy protein to the water and mixing for 16 minutes until hydrated to form a first mixture;
(c) adding 2.8-4.6%w/w soy protein isogel, 0.6-2.2%w/w potato protein, 2-11 %w/w wheat gluten, 0.8-2.2%w/w kappa-carrageenan and 0.2-2.0%w/w bamboo fibre to the first mixture, and further mixing for 9 minutes until hydrated to form a second mixture;
(d) adding 0.6-6.0%w/w rapeseed oil to the second mixture and further mixing for 5 minutes to form a third mixture; and
(e) cooking the third mixture to form a cooked chicken substitute.

Preferably, the method of preparing a cooked chicken substitute comprises:
(a) providing 60-67%w/w water;
(b) adding 8-16%w/w textured soy protein to the water and mixing for 16 minutes until hydrated to form a first mixture;
(c) adding 2.8-4.6%w/w soy protein isogel, 0.6-2.2%w/w potato protein, 2-11%w/w wheat gluten, 0.8-2.2%w/w kappa-carrageenan and 0.2-2.0%w/w bamboo fibre to the first mixture, and further mixing for 9 minutes until hydrated to form a second mixture;
(d) adding 0.6-6.0%w/w rapeseed oil to the second mixture and further mixing for 5 minutes to form a third mixture; and
(e) cooking the third mixture at 92°C in a steam oven for 3 hours to form a cooked chicken substitute.

Optionally, the method of preparing a cooked chicken substitute comprises:
(a) providing 60-67%w/w water;
(b) adding 8-16%w/w textured soy protein to the water and mixing for 16 minutes until hydrated to form a first mixture;
(c) adding 2.8-4.6%w/w soy protein isogel, 0.6-2.2%w/w potato protein, 2-11%w/w wheat gluten, 0.8-2.2%w/w kappa-carrageenan and 0.2-2.0%w/w bamboo fibre and 2.7-6.0%w/w flavouring to the first mixture, and further mixing for 9 minutes until hydrated to form a second mixture;
(d) adding 0.6-6.0%w/w rapeseed oil to the second mixture and further mixing for 5 minutes to form a third mixture; and
(e) cooking the third mixture at 92°C in a steam oven for 3 hours to form a cooked chicken substitute.

Optionally, the method of preparing a cooked chicken substitute comprises:
(a) providing 60-67%w/w water;
(b) adding 8-16%w/w textured soy protein to the water and mixing for 16 minutes until hydrated to form a first mixture;
(c) adding 2.8-4.60%w/w soy protein isogel, 0.6-2.20%w/w potato protein, 2-11%w/w wheat gluten, 0.8-2.20%w/w kappa-carrageenan and 0.2-2.00%w/w bamboo fibre and 3.59%w/w flavouring comprising 0.6%w/w salt, 0.9w/w yeast extract and 2.09%w/w chicken flavour to the first mixture, and further mixing for 9 minutes until hydrated to form a second mixture;
(d) adding 0.60-6.00%w/w rapeseed oil to the second mixture and further mixing for 5 minutes to form a third mixture; and
(e) cooking the third mixture at 92°C in a steam oven for 3 hours to form a cooked chicken substitute.

Preferably, the method of preparing a cooked chicken substitute comprises:
(a) providing 60-67%w/w water;
(b) adding 8-16%w/w textured soy protein to the water and mixing for 16 minutes until hydrated to form a first mixture;
(c) adding 2.8-4.6%w/w soy protein isogel, 0.6-2.2%w/w potato protein, 2-11%w/w wheat gluten, 0.8-2.2%w/w kappa-carrageenan and 0.2-2.0%w/w bamboo fibre and 3.59%w/w flavouring comprising 0.6%w/w salt, 0.9w/w yeast extract and 2.09%w/w chicken flavour to the first mixture; and further mixing for 9 minutes until hydrated to form a second mixture;
(d) adding 0.6-6.0%w/w rapeseed oil until hydrated to the second mixture and further mixing for 5 minutes until hydrated to form a third mixture;
(e) forming a 95mm log with the third mixture; and
(f) cooking the third mixture at 92°C in a steam oven for 3 hours to form a cooked chicken substitute.

Preferably, the method of preparing a cooked chicken substitute comprises:
(a) providing 60.00-67.00%w/w water;
(b) adding 8.00-16.00%w/w textured soy protein to the water and mixing for 16 minutes until hydrated to form a first mixture;
(c) adding 2.80-4.60%w/w soy protein isogel, 0.60-2.20%w/w potato protein, 2.00-11.00%w/w wheat gluten, 0.80-2.20%w/w kappa-carrageenan and 0.20-2.00%w/w bamboo fibre and 3.59%w/w flavouring comprising 0.6%w/w salt, 0.90w/w yeast extract and 2.09%w/w chicken flavour to the first mixture; and further mixing for 9 minutes until hydrated to form a second mixture;
(d) adding 0.60-6.00%w/w rapeseed oil to the second mixture and further mixing for 5 minutes until hydrated to form a third mixture;
(e) forming a 95mm log with the third mixture; and
(f) cooking the third mixture at 92°C in a steam oven for 3 hours to form a cooked chicken substitute.

Further preferably, the method of preparing a cooked chicken substitute comprises:
(a) providing 62.77%w/w water;
(b) adding 14.95%w/w textured soy protein to the water and mixing for 16 minutes until hydrated to form a first mixture;
(c) adding 3.16%w/w soy protein isogel, 0.80%w/w potato protein, 8.04%w/w wheat gluten, 1.59%w/w kappa-carrageenan and 0.16%w/w bamboo fibre and 4.05%w/w flavouring comprising 0.6%w/w salt, 0.9w/w yeast extract, 2.09%w/w chicken flavour and 0.46%w/w natural flavourings to the first mixture; and further mixing for 9 minutes until hydrated to form a second mixture;
(d) adding 4.48%w/w rapeseed oil until hydrated to form a second mixture and further mixing for 5 minutes until hydrated to form a third mixture;
(e) forming a 95mm log with the third mixture; and
(f) cooking with the third mixture at 92°C in a steam oven for 3 hours to form a cooked chicken substitute.

Even further preferably, the method of preparing a cooked chicken substitute comprises:
(a) providing 62.77%w/w water;
(b) adding 14.95%w/w textured soy protein to the water and mixing for 16 minutes until hydrated to form a first mixture;
(c) adding 3.16%w/w soy protein isogel, 0.801 %w/w potato protein, 8.037%w/w wheat gluten, 1.592%w/w kappa-carrageenan and 0.16%w/w bamboo fibre and 4.05%w/w flavouring comprising 0.6%w/w salt, 0.9w/w yeast extract, 2.09%w/w chicken flavour and 0.46%w/w natural flavourings to the first mixture; and further mixing for 9 minutes until hydrated to form a second mixture;
(d) adding 4.48%w/w rapeseed oil until hydrated to form a second mixture and further mixing for 5 minutes until hydrated to form a second mixture;
(e) forming a 95mm log with the third mixture; and
(f) cooking with the third mixture at 92°C in a steam oven for 3 hours to form a cooked chicken substitute.

### Brief Description of the Drawings

Embodiments of the invention will be described with reference to the following non-limiting examples and the accompanying drawings in which:

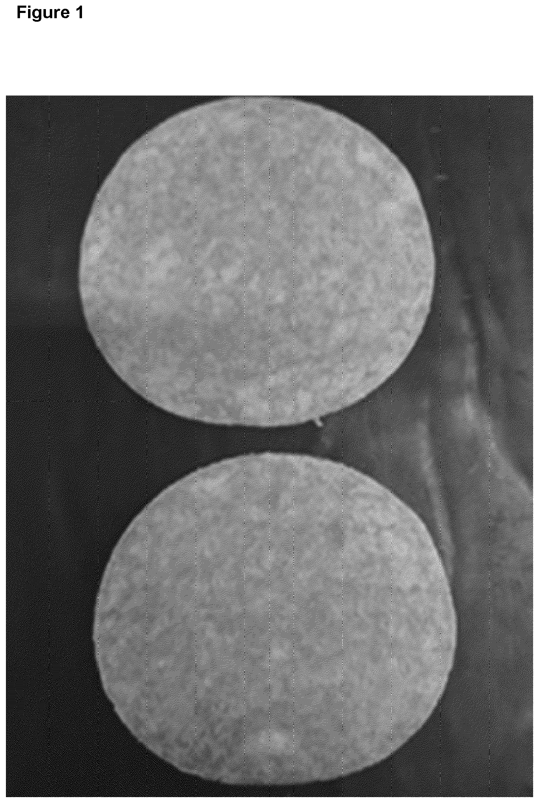

**Figure 1** illustrates the final ham product;

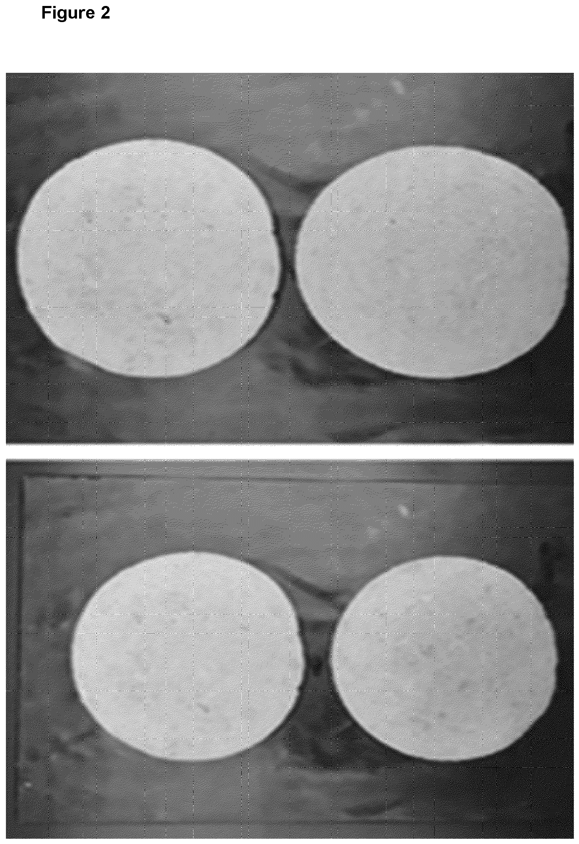

**Figure 2** illustrates the final chicken product;
**Figure 3** illustrates phase one hydration of the chicken product;
**Figure 4** illustrates the chicken mix post bowl chopping stage;
**Figure 5** illustrates the stacking arrangements for the chicken and beef products;
**Figure 6** illustrates phase one hydration of the beef produc ;
**Figure 7** illustrates the beef mix phase two hydration;
**Figure 8** illustrates the post-chopping beef product; and

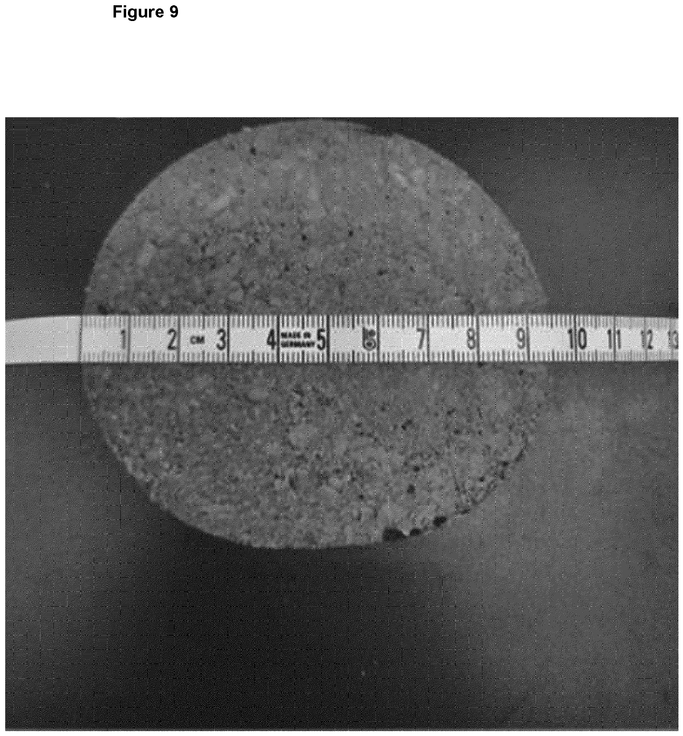

**Figure 9** illustrates the 93mm formed beef product.

### Materials & Methods / Examples

### Example 1

### Preparing a cooked meat substitute

The meat substitute phase was firstly made by pre-blending 64.5kg water with 0.94kg colour, and mixed by hand with a whisk until fully dissolved. Optionally, stock, citric acid and FMT (flavour masking technology; natural flavourings) can also be included in this pre-blend.

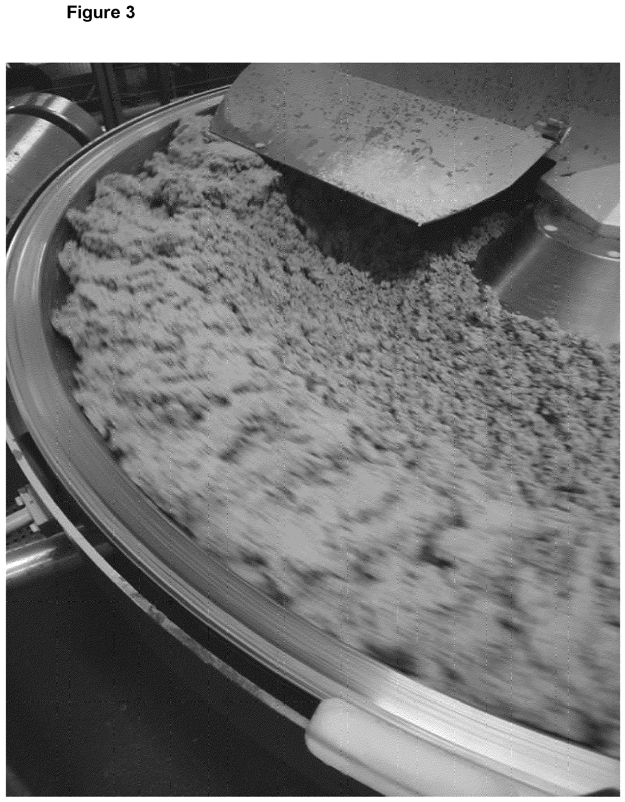

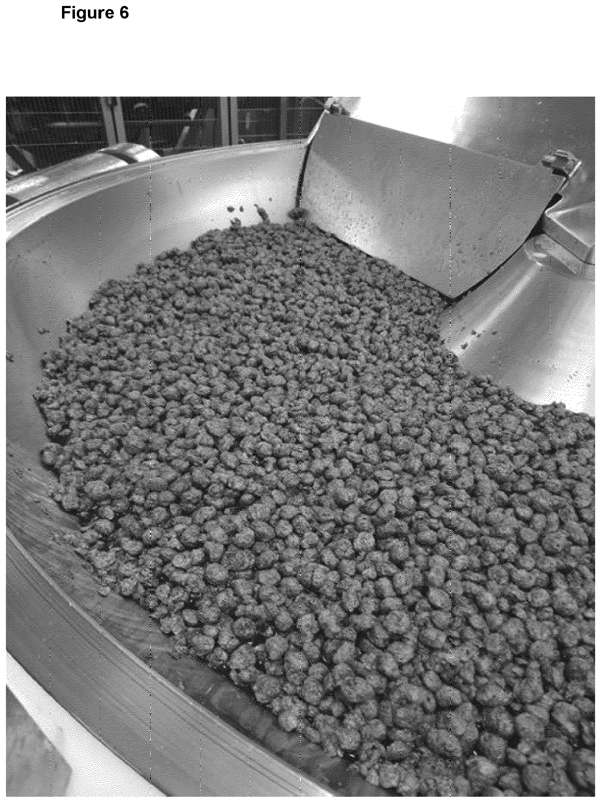

### PHASE ONE HYDRATION; takes place in Tote Bins (Figure 3; Figure 6)

This 66.24kg pre-blend was added to 10.91kg texturised vegetable protein comprising soya protein isolate and cornstarch (sold under trademark Textura by ADM) and left to hydrate for an initial period of time (16 minutes).

### PHASE TWO HYDRATION & MIXING; takes place in Bowl Chopper MASCHINENFABRIK LASKA K-330 GmbH.

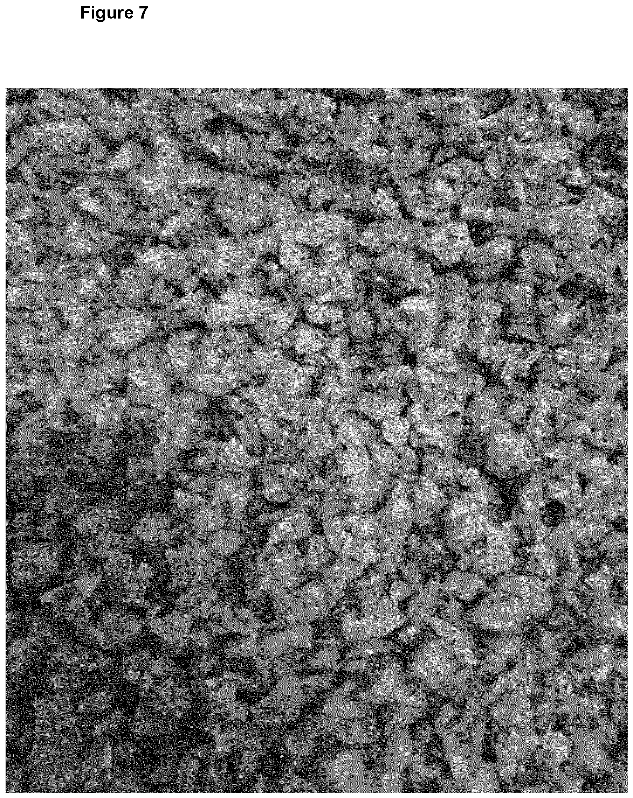

The Texturised Vegetable Protein (TVP) and pre-blended water/colour was transferred to a bowl chopper for phase two of hydration, where the mixture is agitated in alternate directions until all water/colour is hydrated into the TVP. Optionally, a second, un-hydrated Textured Wheat Protein comprising wheat gluten, stabiliser and preservative (sold under trademark as Wheatpro by Kerry Group) can be added for the last 2 minutes of this phase (Figure 7).

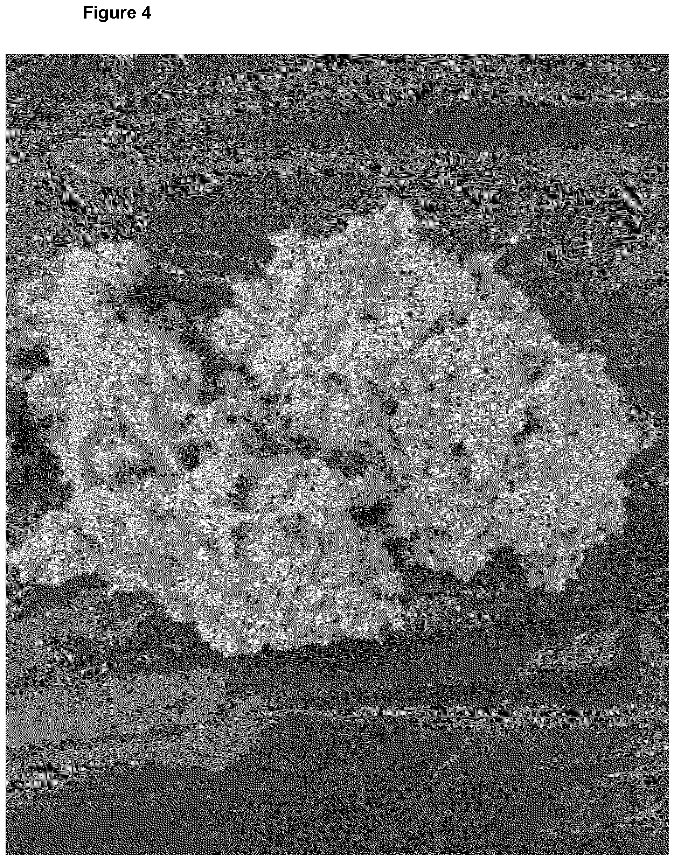

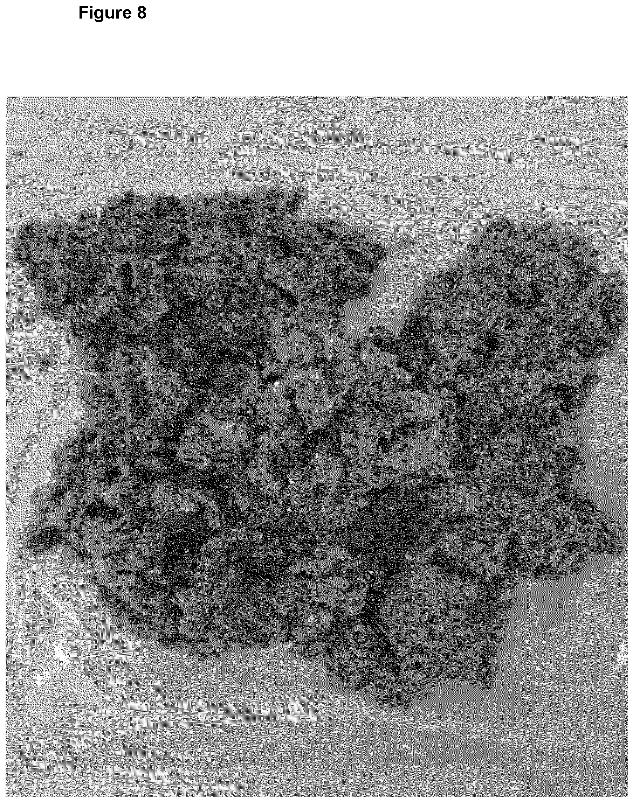

1.9kg kappa carrageenan, 3.4kg soy protein isolate, 0.2kg bamboo fibre, 9.4kg vital wheat gluten and 0.9kg potato protein, 0.94kg colour (optional-SKU dependent), and 3.5kg natural flavours (beef, chicken, ham - Kerry Group) were sequentially added. The admixture was bowl chopped (similarly in alternate directions and with differing RPMs on the bowl) until a 'playdough' was observed (Figure 4; Figure 8). 3.97kg rapeseed oil was added. This was chopped (in alternate directions and with differing RPMs on the bowl) for less than 10 mins to form a homogenous meat substitute phase emulsion with a 'firm formable' texture.

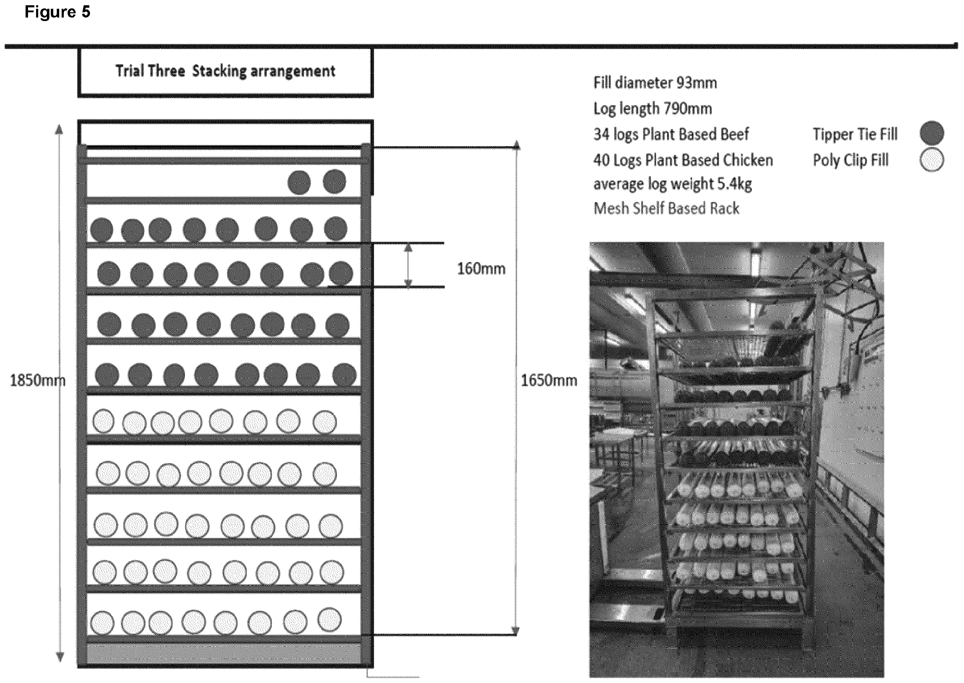

The admixture was transferred into a Handtmann VF80 vacuum filler connected to a JBT RS4204 Tipper Tie. The admixture is volumetrically slack-filled via these two machines into Viskase Visflex casings with a 97mm diameter, with each log measuring 800mm Figure 5). Manual intervention is required to ensure that the admixture is evenly distributed within the casing.

These admixture logs were then transferred to cooking racks fitted with 10mm mesh screen shelving to ensure the shape of the product was unaltered. The racks were then placed into steam ovens where they were cooked at 92°C for 3 hours until a core temperature of 90°C was reached.

Once cooked, the logs were transferred to a blast chiller for 4.5 hours until a core temperature of 3°C was observed. They were then moved into an area of cold storage (2-5°C) for a period of 12 hours before any further handling occurred.

The casings were then removed manually, prior to slicing. All versions of the meat substitute were sliced with a circular blade operating at a speed of 400-800rpm, and at a width of 1.5mm.

The slices were then packaged in a modified atmosphere packing environment where the residual O₂ is maintained between 0.2-0.3%.

### Example 2

### Preliminary examples of the composition of the cooked ham substitute

**Early Iteration Example 2.1**

| | **%w/w** |
|---|---|
| Carrageenan Kappa 20038753 | 1.9 |
| Guar 20032608 | 1.9 |
| Vital Wheat Gluten 20038084 | 6.0 |
| Soya Protein 20107717 | 3.8 |
| Ashlands MX | 0.9 |

The above admixture, when used as a binding structure in early iterations, delivered a finished product with a tacky surface. The product was also soft and produced a cohesive mass on chewing, which was not desired as a meat substitute.

**Early Iteration Example 2.2**

| | **%w/w** |
|---|---|
| Carrageenan Kappa 20038753 | 2.0 |
| Guar 20032608 | 2.0 |
| Vital Wheat Gluten 20038084 | 2.1 |
| Soya Protein isogel | 4.0 |
| Ashlands MX | 1.0 |

The above admixture, when used as a binding structure in early iterations, delivered a product with low density and less resistance than desired. It also failed to meet nutritional parameters.

**Early Iteration Example 2.3**

| | **%w/w** |
|---|---|
| Carrageenan Kappa 20038753 | 2.0 |
| Guar 20032608 | 2.0 |
| Vital Wheat Gluten 20038084 | 2.0 |
| Soya Protein isogel | 4.0 |
| Ashlands MX | 1.5 |

The above admixture, when used as a binding structure in early iterations, delivered a product with a soft texture.

**Early Iteration Example 2.4**

| | **%w/w** |
|---|---|
| Carrageenan Kappa 20038753 | 2.0 |
| Guar 20032608 | 2.0 |
| Vital Wheat Gluten 20038084 | 1.4 |
| Soya Protein isogel | 4.5 |
| Ashlands MX | 1.5 |

The above admixture, when used as a binding structure in early iterations, delivered a product with a soft and sticky texture.

**Early Preferred Iteration Example 2.5**

| | **%w/w** |
|---|---|
| Carrageenan Kappa | 1.63 |
| Vital Wheat Gluten | 8.25 |
| potato protein | 0.83 |
| Soya Protein isogel | 3.25 |
| Bamboo fibre | 0.17 |

The above admixture was preferred as it delivers a product with the closest textural characteristics to real meat. The texture is tight and there is no residual tackiness. All nutritional parameters also met with this admixture.

### Example 3

### Composition of the cooked ham substitute

**Table. 1. Table showing the composition of the cooked ham substitute**

| **Ingredient** | **Range %w/w** | **Optimal %w/w** |
|---|---|---|
| First plant protein (textured soy protein) | 8-16 | 10.910 |
| Water | 60-67 | 64.500 |
| Colouring | 0.20-1.20 | 0.900 |
| First thickener (wheat gluten) | 2-11 | 9.421 |
| Second plant protein (soy protein isogel) | 2.80-4.60 | 3.712 |
| Second thickener (kappa carrageenan) | 0.80-2.20 | 1.866 |
| Third plant protein (potato protein) | 0.60-2.20 | 0.942 |
| Fibre (Bamboo fibre) | 0.60-2.00 | 0.194 |
| Flavourings | 3.50-6.00 | 3.510% TOTAL |
| | | Salt (1.670) |
| | | Base Ham flv pdr (0.410) |
| | | Boiled Ham flv pdr (0.830) |
| | | Gammon flv pdr (0.300) |
| | | Yeast extract (0.300) |
| Fat (rapeseed oil) | 0.60-6.00 | 3.970 |
| Acidity regulator (citric acid) | 0.01-2.00 | 0.080 |

### Example 4

### Composition of the cooked beef substitute

**Table. 2. Table showing the composition of the cooked beef substitute**

| **Ingredient** | **Range %w/w** | **Optimal %w/w** |
|---|---|---|
| First plant protein (textured soy protein) | 8-16 | 10.100 |
| Fourth plant protein (Textured wheat protein; Wheatpro) | 0.10-5.00 | 3.200 |
| Water | 60-67 | 60.500 |
| Mushroom stock | 0.10-5.00 | 3.700 |
| Colouring | 0.10-0.60 | 0.400 |
| First Thickener (wheat gluten) | 2-11 | 8.002 |
| Second plant protein (soy protein isogel) | 2.80-4.60 | 3.152 |
| Second thickener (kappa carrageenan) | 0.80-2.20 | 1.585 |
| Third plant protein (potato protein) | 0.60-2.20 | 0.800 |
| Fibre (Bamboo fibre) | 0.20-2.00 | 0.161 |
| Flavourings | 0.10-6.00 | 5.190% TOTAL Salt 1.000 |
| | | Beef roast flv pdr (1.303) |
| | | Beef flv pdr (0.326) |
| | | Roasted meat flv pdr (0.651) |
| | | Juicy beef marrow flv pdr (0.651) |
| | | Savarome RBN (0.217) |
| | | Oven roast extract (0.170) |
| | | Barley Malt Extract (0.326) 0 |
| Fat (rapeseed oil) | 0.60-6.00 | 3.000 |
| Acidity regulator (citric acid) | 0.01-2.00 | 0.110 |

### Example 5

### Composition of the cooked chicken substitute

**Table. 3. Table showing the composition of the cooked chicken substitute**

| **Ingredient** | **Range %w/w** | **Optimal %w/w** |
|---|---|---|
| First plant protein (textured soy protein) | 8-16 | 14.950 |
| Water | 60-67 | 62.770 |
| First thickener (wheat gluten) | 2-11 | 8.037 |
| Second plant protein (sov protein isogel) | 2.80-4.60 | 3.160 |
| Second thickener (kappa carrageenan) | 0.80-2.20 | 1.592 |
| Third plant protein (potato protein) | 0.60-2.20 | 0.801 |
| Fibre (Bamboo fibre) | 0.60-2.00 | 0.160 |
| Flavourings | 2.70-6.00 | 4.050% TOTAL |
| | | Salt (0.600) |
| | | Yeast extract (0.900) |
| | | Chicken Flavour (2.090) |
| | | Natural flavouring (0.460) |
| Fat (rapeseed oil) | 0.10-6.00 | 4.480 |

### Example 6

### Conclusion

Consumers are not satisfied with the flavour, texture, and colour of current offerings of sliced cooked meat alternatives. Through the use of the combination of specific ingredients and the process as outlined, a sliced cooked meat alternative has been produced that has sensory and structural resemblance to real sliced cooked meats.

## Claims

1. A cooked meat substitute comprising:
(a) water;
(b) a first plant protein;
(c) a second plant protein;
(d) a third plant protein;
(e) a first thickener;
(f) a second thickener;
(g) a fibre; and
(h) a fat.

2. The cooked meat substitute according to Claim 1 comprising:
(a) 60-67%w/w water;
(b) 8-16%w/w of a first plant protein;
(c) 2.8-4.6%w/w of a second plant protein;
(d) 0.6-2.2%w/w of a third plant protein;
(e) 2-11 %w/w of a first thickener;
(f) 0.8-2.2%w/w of a second thickener;
(g) 0.2-2.0%w/w of a fibre; and
(h) 0.6-6.0%w/w of a fat.

3. The cooked meat substitute according to Claim 1 or Claim 2, wherein the first plant protein is textured soy protein, the second plant protein is soy protein isogel and the third plant protein is potato protein.

4. The cooked meat substitute according to any one of Claims 1-3, wherein the first thickener is wheat gluten and the second thickener is kappa-carrageenan.

5. The cooked meat substitute according to any one of Claims 1-4, wherein the fibre is bamboo fibre.

6. The cooked meat substitute according to any one of Claims 1-5, wherein the fat is rapeseed oil.

7. The cooked meat substitute according to any one of Claims 1-6, wherein the cooked meat substitute is a cooked ham substitute, a cooked beef substitute or a cooked chicken substitute.

8. The cooked meat substitute according to 7, wherein the cooked meat substitute is a cooked ham substitute comprising:
(a) 64.5%w/w water;
(b) 10.91 %w/w of a first plant protein;
(c) 3.71%w/w of a second plant protein;
(d) 0.94%w/w of a third plant protein;
(e) 9.42%w/w of a first thickener;
(f) 1.87%w/w of a second thickener;
(g) 0.19%w/w of a fibre;
(h) 3.97%w/w of a fat;
(i) 3.51 %w/w flavouring;
(j) 0.9%w/w colouring; and
(k) 0.08%w/w acidity regulator.

9. The cooked meat substitute according to 7, wherein the cooked meat substitute is a cooked beef substitute comprising:
(a) 60.5%w/w water;
(b) 10.1%w/w of a first plant protein;
(c) 3.15%w/w of a second plant protein;
(d) 0.8%w/w of a third plant protein;
(e) 8.0%w/w of a first thickener;
(f) 1.59%w/w of a second thickener;
(g) 0.16%w/w of a fibre;
(h) 3%w/w of a fat; and
(i) 0.4%w/w colouring;
(j) 5.19%w/w flavouring;
(k) 0.11 %w/w acidity regulator
(l) 3.7%w/w mushroom stock; and
(m) 3.30%w/w of a fourth plant protein.

10. The cooked beef substitute according to Claim 9, wherein the fourth plant protein is wheat protein.

11. The cooked meat substitute according to 7, wherein the cooked meat substitute is a cooked chicken substitute comprising:
(a) 62.77%w/w water;
(b) 14.95%w/w of a first plant protein;
(c) 3.16%w/w of a second plant protein;
(d) 0.8%w/w of a third plant protein;
(e) 8.04%w/w of a first thickener;
(f) 1.59%w/w of a second thickener;
(g) 0.16%w/w of a fibre;
(h) 4.48%w/w of a fat; and
(i) 4.05%w/w flavouring.

12. A method of preparing a cooked meat substitute, the method comprising the steps of:
(a) providing 60-67%w/w water;
(b) adding 8-16%w/w of the first plant protein to the water and mixing to form a first mixture;
(c) adding 2.8-4.6%w/w of the second plant protein, 0.6-2.2%w/w of the third plant protein, 2-11%w/w of the first thickener, 0.8-2.2%w/w of the second thickener and 0.2-2.0%w/w of fibre, and further mixing to form a second mixture;
(d) adding 0.6-6.0%w/w of the fat and further mixing to form a third mixture; and
(e) cooking the third mixture to form a cooked meat substitute.

13. A method of preparing a cooked meat substitute, wherein the cooked meat substitute is a cooked ham substitute, the method comprising the steps of:
(a) providing 60-67%w/w water and 0.2-1.2%w/w colouring;
(b) adding 8-16%w/w textured soy protein to the water and colouring and mixing for 16 minutes until hydrated to form a first mixture;
(c) adding 2.8-4.6%w/w soy protein isogel, 0.6-2.2%w/w potato protein, 2-11%w/w wheat gluten, 0.8-2.2%w/w kappa-carrageenan and 0.2-2.0%w/w bamboo fibre to the first mixture, and further mixing for 9 minutes until hydrated to form a second mixture;
(d) adding 0.6-6.0%w/w rapeseed oil and further mixing for 5 minutes to form a third mixture; and
(e) cooking the third mixture to form a cooked ham substitute.

14. A method of preparing a cooked meat substitute, wherein the cooked meat substitute is a cooked beef substitute, the method comprising the steps of:
(a) providing 60-67%w/w water and 0.1 -0.6%w/w colouring, 0.1 -5.0%w/w mushroom stock, and mixing for 3 minutes to form a first mixture;
(b) adding 0.1-5.0%w/w wheat protein to the first mixture, and mixing for 2 minutes to form a second mixture;
(c) adding 8-16%w/w textured soy protein to the second mixture, and mixing for 16 minutes until hydrated to form a third mixture;
(d) adding 2.8-4.6%w/w soy protein isogel, 0.6-2.2%w/w potato protein, 2-11%w/w wheat gluten, 0.8-2.2%w/w kappa-carrageenan and 0.2-2.0%w/w bamboo fibre and 3.5-6.00%w/w flavouring to the third mixture, and further mixing for 9 minutes until hydrated to form a fourth mixture;
(e) adding 0.6-6.0%w/w rapeseed to the fourth mixture and further mixing for 5 minutes to form a fifth mixture;
(f) cooking the fifth mixture to form a cooked beef substitute.

15. A method of preparing a cooked meat substitute, wherein the cooked meat substitute is a cooked chicken substitute, the method comprising the steps of:
(a) providing 60-67%w/w water;
(b) adding 8-16%w/w textured soy protein to the water and mixing for 16 minutes until hydrated to form a first mixture;
(c) adding 2.8-4.6%w/w soy protein isogel, 0.6-2.2%w/w potato protein, 2-11%w/w wheat gluten, 0.8-2.2%w/w kappa-carrageenan and 0.2-2.0%w/w bamboo fibre to the first mixture, and further mixing for 9 minutes until hydrated to form a second mixture;
(d) adding 0.6-6.0%w/w rapeseed oil to the second mixture and further mixing for 5 minutes to form a third mixture; and
(e) cooking the third mixture to form a cooked chicken substitute.
